# EUROPÄISCHE PATENTANMELDUNG

(11) **EP 3 875 527 A1**
(43) Veröffentlichungstag der Anmeldung: **08.09.2021**
(21) Anmeldenummer: 20206213.9
(22) Anmeldetag: 06.11.2020
(51) Int. Cl.: C08L 5/00, C08J 5/04, C08L 97/00, C08B 1/00

(54) **GEBRAUCHSGEGENSTAND AUS ZUCKERRÜBENSCHNITZELN**

(30) Priorität: 17.12.2019 EP 19217114
(71) Anmelder: Pfeifer & Langen GmbH & Co. KG, 50858 Köln (DE)
(72) Erfinder: KOCH, Timo Johannes, 50189 Elsdorf (DE); SEEMANN, Julia, 52379 Langerwehe (DE)
(74) Vertreter: Kutzenberger Wolff & Partner

(57) **Zusammenfassung**

Die Erfindung betrifft einen Gebrauchsgegenstand zur Verwendung bei der Einnahme oder Aufbewahrung von Mahlzeiten oder Getränken, wobei der Gebrauchsgegenstand aus Zuckerrüben gewonnene Partikel umfasst. Bevorzugt umfasst der Gebrauchsgegenstand einen Naturfaserverbundwerkstoff, bei dem die aus Zuckerrüben gewonnenen Partikel in eine Polymermatrix eingebettet sind. Bevorzugt ist der Gebrauchsgegenstand ausgewählt aus der Gruppe bestehend aus Essgeschirr, Trinkgefäßen, Essbesteck, und Behältnissen zur Aufbewahrung von Lebensmitteln- oder Getränken.

## Beschreibung

Es wird die Priorität der europäischen Patentanmeldung Nr. 19 217 114.8 vom 17. Dezember 2019 beansprucht.

Die Erfindung betrifft einen Gebrauchsgegenstand zur Verwendung bei der Einnahme oder Aufbewahrung von Mahlzeiten oder Getränken, wobei der Gebrauchsgegenstand aus Zuckerrüben gewonnene Partikel umfasst. Bevorzugt umfasst der Gebrauchsgegenstand einen Naturfaserverbundwerkstoff, bei dem die aus Zuckerrüben gewonnenen Partikel in eine Polymermatrix eingebettet sind. Bevorzugt ist der Gebrauchsgegenstand ausgewählt aus der Gruppe bestehend aus Essgeschirr, Trinkgefäßen, Essbesteck, und Behältnissen zur Aufbewahrung von Lebensmitteln- oder Getränken.

Gebrauchsgegenstände wie Essgeschirr, Essbesteck und Behältnisse zur Aufbewahrung von Lebensmitteln- und Getränken, welche auf konventionellen Kunststoffen wie z. B. Polypropylen oder Polystyrol basieren, bieten eine Reihe von Vorteilen. Beispielsweise erlaubt die leichte Formbarkeit die Herstellung beliebiger Formen mit erheblich geringerem Aufwand als bei vergleichbaren keramischen oder metallischen Gebrauchsgegenständen. Das geringe Gewicht bietet zudem Vorteile für die Handhabung durch den Verbraucher und reduziert die Herstellungs- sowie Transportkosten im industriellen Maßstab.

Es ist jedoch allgemein bekannt, dass die Verwendung von diesen Gebrauchsgegenständen aufgrund des Verbrauchs an fossilen Rohstoffen ein immer größer werdendes Umweltproblem darstellt. In diesem Zusammenhang ist außerdem der in großen Mengen anfallende Müll problematisch, insbesondere im Hinblick auf solche Gebrauchsgegenstände, die nur zur einmaligen Verwendung geeignet sind.

Entsprechende Gebrauchsgegenstände auf der Basis von nachwachsenden und/oder biologisch abbaubaren Werkstoffen sind an sich bekannt.
Liu et al., J. Agric. Food Chem., 2005, 53 (23), pp 9017-9022 und Chen et al., Ind. Eng. Chem. Res., 2008, 47 (22), pp 8667-8675, betreffen biologisch abbaubare Verbundstoffe aus Zuckerrübenschnitzeln und Polymilchsäure.
Liu et al., Ind. Eng. Chem. Res., 2011, 50 (24), pp 13859-13865 betrifft thermoplastische Mischungen aus Zuckerrübenpulpe und Poly(butylenadipat-co-terephthalat).
Bliss et al., Agricultural Research 2013, Seite 13 betrifft Verwendungen von Zuckerrübenpulpe.
Chen et al., Ind. Eng. Chem. Res. 2008, 47, 8667-8675 betrifft Verbundwerkstoffe aus Zuckerrübenpulpe und Polymilchsäure.
Liu et al., J Polym Environ (2011) 19:559-567 betrifft Herstellung und Eigenschaften von Kunststoffen aus Zuckerrübenpulpe, welche Wasser und Glycerin als Weichmacher enthalten.

EP 0 506 650 B1 betrifft ein biologisch abbaubares Verpackungs- und/oder Hüll-Material, dessen Basis durch Polysaccharid(e) gebildet wird, Verfahren zu dessen Herstellung und die Verwendung der zu ihm führenden Rohstoffe.

EP 0 918 825 B1 betrifft eine biologisch abbaubare Zusammensetzung, welche mindestens ein Lignin und/oder ein Lignin enthaltendes Material sowie ein Protein enthält und welche für die Herstellung von biologisch abbaubaren Gegenständen, wie beispielsweise Verbrauchsartikel, wie Reklameartikel, Etiketten, Becher, Blumentöpfe, Fadenspulen, Kerzenbecher und dergleichen sowie auch für die Herstellung von Folien oder geschäumten Materialien, geeignet ist.

US 2 355 180 A betrifft Kunststoffverbindungen und insbesondere solche, in denen Lignin enthalten sein kann.

Die bekannten Gebrauchsgegenstände sind jedoch nicht in jeder Hinsicht zufriedenstellend und es besteht ein Bedarf an verbesserten Gebrauchsgegenständen.

Für Gebrauchsgegenstände basierend auf Lignin, Holz, Papier oder Polymilchsäure müssen die entsprechenden Rohstoffe eigens angebaut werden. Weiterhin erfordert die Herstellung typischerweise einen zeit- und energieintensiven Aufschluss sowie eine entsprechende Aufarbeitung der Rohstoffe, bevor das Endprodukt erhalten wird. Dies wirkt sich ebenfalls nachteilig auf die Umwelt aus und verringert den Nachhaltigkeitsvorteil gegenüber konventionellen Kunststoffen erheblich.

Typischerweise sind diese Gebrauchsgegenstände auch nicht ausreichend beständig gegen Wasser und/oder Feuchtigkeit. In diesen Fällen ist eine Beschichtung mit konventionellen Kunstoffen erforderlich, was problematisch im Hinblick auf Umwelt und Entsorgung ist.

Es ist eine Aufgabe der Erfindung, Gebrauchsgegenstände bereitzustellen, welche Vorteile gegenüber dem Stand der Technik aufweisen. Die Gebrauchsgegenstände sollten umweltverträglich und biologisch sein, natürliche Ressourcen schonen, kostengünstig und gut herstellbar sein.

Diese Aufgabe wird durch den Gegenstand der Patentansprüche gelöst.

Die Erfindung betrifft einen Gebrauchsgegenstand zur Verwendung bei der Einnahme oder Aufbewahrung von Mahlzeiten oder Getränken, wobei der Gebrauchsgegenstand aus Zuckerrüben gewonnene Partikel umfasst. Bevorzugt umfasst der Gebrauchsgegenstand einen Naturfaserverbundwerkstoff, bei dem die aus Zuckerrüben gewonnenen Partikel in eine Polymermatrix eingebettet sind.

Es wurde überraschend gefunden, dass sich Zuckerrübenschnitzel in großem Maßstab in Naturfaserverbundwerkstoffen unterschiedlichster Zusammensetzung einsetzen lassen. Neben Futtermitteln und Rohstoffen für die Erzeugung von Biogas steht somit eine neue Verwendungsmöglichkeit von Zuckerrübenschnitzeln zur Verfügung, welche in großen Mengen bei der Zuckerproduktion anfallen und daher vergleichsweise kostengünstig und gleichzeitig besonders nachhaltig sind.

Insbesondere haben Zuckerrübenschnitzel im Vergleich zu anderen Naturfasern den Vorteil, dass sie als Nebenprodukt der Zuckerherstellung nicht eigens angebaut werden müssen, sondern bereits heute bei der Produktion im Überschuss anfallen.

Das einfache Herstellungsverfahren der aus Zuckerrüben gewonnenen Partikel ist zudem vorteilhaft gegenüber dem Stand der Technik, da hier keine der typischen zeit- und energieintensiven Aufschluss- und Aufarbeitungsverfahren erforderlich sind. Dies wirkt sich zusätzlich vorteilhaft auf die Herstellungskosten aus.

Die mechanischen Eigenschaften des Naturfaserverbundwerkstoffs sind mit den Eigenschaften anderer Faserverbundwerkstoffe auf Basis anderer Naturfasern durchaus vergleichbar, ggf. sogar besser. Es wurde überraschend gefunden, dass sich Zuckerrübenschnitzel mit einer Korngröße im Bereich von 30 bis 800 µm besonders gut zu Naturfaserverbundwerkstoffen verarbeiten lassen. Liegt die Korngröße darunter, so wird die mittlere Faserlänge reduziert; liegt die Korngröße darüber, so lassen sich die Zuckerrübenschnitzel nicht mehr so gut in eine Polymermatrix einarbeiten und verpressen. Erfindungsgemäß sind grundsätzlich alle Korngrößen einsetzbar, Korngrößen im Bereich von 30 bis 800 µm sind jedoch bevorzugt.

Ferner wurde überraschend gefunden, dass die Naturfasern aus Zuckerrübenschnitzeln mit einer Vielzahl von Polymeren und Polymermischungen kompatibel sind, so dass sie sich gut in Polymermatrices daraus einbetten lassen, wodurch hervorragende Eigenschaften erreicht werden können. Dabei können die Polymere thermoplastisch oder duroplastisch sein.

Außerdem wurde überraschend gefunden, dass die erfindungsgemäßen Naturfaserverbundwerkstoffe ggf. auch bei der Verarbeitung kurzfristig hohen Temperaturen ausgesetzt werden können, wie sie beispielsweise beim Spritzgießen auftreten. Dies ist insofern überraschend, als dass Zuckerrübenschnitzel ggf. einen hohen Gehalt an Pektin aufweisen können, welches üblicherweise temperaturempfindlich ist.

Ferner wurde überraschend gefunden, dass die Naturfaserverbundwerkstoffe ein vorteilhaftes Aussehen haben. So verleihen die Zuckerrübenschnitzel den Naturfaserverbundwerkstoffen einen attraktiven Glanz. Weiterhin konnte eine ansprechende Maserung bei nicht eingefärbten Naturfaserverbundwerkstoffe beobachtet werden.

Naturfaserverbundwerkstoffe zeichnen sich u.a. durch eine geringe Dichte bei gleichzeitig hoher Festigkeit und Steifigkeit aus. Es hat sich als vorteilhaft erwiesen, dass der erfindungsgemäße Gebrauchsgegenstand im Vergleich zum Stand der Technik eine höhere mechanische Belastbarkeit bei geringerer Materialdichte aufweist.

Eine höhere mechanische Belastbarkeit erlaubt einen geringeren Materialeinsatz und damit einhergehende Gewichtsreduktion bei gleichbleibender mechanischer Stabilität. Dies wirkt sich vorteilhaft auf die praktische Handhabung und die Transportkosten aus.

Die erfindungsgemäßen Gebrauchsgegenstände weisen im Vergleich zum Stand der Technik mitunter einen geringeren Wärmeleitkoeffizienten auf und sind daher bei Anwendungen, welche auf eine thermische Isolierung abzielen (z. B. Thermobecher), vorteilhaft gegenüber vergleichbaren Formteilen aus dem Stand der Technik.

Ein erster Aspekt der Erfindung betrifft einen Gebrauchsgegenstand zur Verwendung bei der Einnahme oder Aufbewahrung von Mahlzeiten oder Getränken, wobei der Gebrauchsgegenstand aus Zuckerrüben gewonnene Partikel umfasst. Bevorzugt umfasst der Gebrauchsgegenstand einen Naturfaserverbundwerkstoff, bei dem die aus Zuckerrüben gewonnenen Partikel in eine Polymermatrix eingebettet sind, wobei die Polymermatrix ein Biopolymer umfasst oder daraus besteht.

Gebrauchsgegenstände zur Verwendung bei der Einnahme oder Aufbewahrung von Mahlzeiten oder Getränken sind dem Fachmann bekannt.

Der erfindungsgemäße Gebrauchsgegenstand zur Verwendung bei der Einnahme oder Aufbewahrung von Mahlzeiten oder Getränken ist bevorzugt ausgewählt aus der Gruppe bestehend aus Essgeschirr, Trinkgefäßen, Essbesteck, und Behältnissen zur Aufbewahrung von Lebensmitteln- oder Getränken, wobei die vorstehend genannten Gebrauchsgegenstände ggf. bevorzugt wiederverschließbar sind.

Handelt es sich bei dem Gebrauchsgegenstand um Essgeschirr, so ist dieses bevorzugt ausge-wählt aus der Gruppe bestehend aus Teller, Tasse, Untertasse, Trinkbehältnis, Schüssel, Kanne, Messbecher, und Tablett, beispielsweise Essteller, Suppenteller, Dessertteller, Kaffeetasse, Teetasse, Trinkglas, Servierschüssel, Sauciere, und dergleichen.

In einer bevorzugten Ausführungsform ist das Essgeschirr verschließbar, vorzugsweise mittels eines passenden Deckels. Beispiele für solch verschließbares Essgeschirr sind Teekannen, Kaffeekannen, Saucieren, Milchkännchen, Thermo- und/oder Isolierbecher, Thermoskannen, Salatschüsseln, Kuchenbehälter, und dergleichen.

Handelt es sich bei dem Gebrauchsgegenstand um Essbesteck, so ist dieses bevorzugt ausge-wählt aus der Gruppe bestehend aus Messer, Gabel, und Löffel, beispielsweise Tafelmesser, Menümesser, Dessertmesser, Steakmesser, Obstmesser, Speiseschieber, Tranchiermesser, Tortenmesser, Butterstreicher, Fischmesser, Kuchengabel, Tafelgabel, Menügabel, Dessertgabel, Kuchengabel, Konfektgabel, Tranchiergabel, Fischgabel, Kartoffelgabel, Pommesgabel, Essstäbchen, Apostellöffel, Butterlöffel, Cocktaillöffel, Dessertlöffel, Eierlöffel, Eislöffel, Joghurtlöffel, Espresso-/Mokkalöffel, Gemüselöffel, Gläschenlöffel, Gourmetlöffel, Grapefruitlöffel, Honiglöffel, Kaffeelöffel, Kartoffellöffel, Kaviarlöffel, Kiwilöffel, Marmeladenlöffel, Probierlöffel, Querlöffel, Sahnelöffel, Salatlöffel, Salz-, Pfeffer- und Gewürzlöffel, Saucenlöffel, Spaghettilöffel, Suppenlöffel, Suppentassenlöffel, Teelöffel, Thunfischlöffel, Zuckerlöffel, und dergleichen.

Handelt es sich bei dem Gebrauchsgegenstand um ein Behältnis zur Aufbewahrung von Lebensmitteln- oder Getränken, so ist dieses bevorzugt ausgewählt aus der Gruppe bestehend aus Dosen, Schüsseln und Flaschen.

In einer bevorzugten Ausführungsform ist das Behältnis zur Aufbewahrung von Lebensmitteln- oder Getränken verschließbar, vorzugsweise mittels eines passenden Deckels. Beispiele für solche verschließbaren Behältnisse sind Zuckerdosen, Milchflaschen, Salatschüsseln, Vorratsdosen, und dergleichen.

In einer bevorzugten Ausführungsform umfasst der erfindungsgemäße Gebrauchsgegenstand außerdem zusätzlich Trinkhalme und/oder Schneebesen. Bevorzugte Trinkhalme sind Sensory-Trinkhalme, Teleskop-Trinkhalme, gerade, U-förmige und Z-förmige Trinkhalme, Siebtrinkhalme ("Bombilla"), und dergleichen.

In einer bevorzugten Ausführungsform umfasst der erfindungsgemäße Gebrauchsgegenstand
- Lebensmittelverpackungen, d.h. Behältnisse wie Boxen (mit oder ohne Deckel) für Lebensmittel, die a) dazu bestimmt sind, unmittelbar vor Ort verzehrt oder als Take-Away-Gericht mitgenommen zu werden; b) in der Regel aus der Verpackung heraus verzehrt werden; und/oder c) ohne weitere Zubereitung wie Kochen, Sieden oder Erhitzen verzehrt werden können; einschließlich Lebensmittelverpackungen für Fast Food oder andere Speisen zum unmittelbaren Verzehr;
- Trinkbecher, Getränkebecher;
- Besteck (Gabeln, Messer, Löffel, Essstäbchen (Chopsticks));
- Teller;
- Getränkebehälter, d.h. Behältnisse, die zum Bevorraten eines Getränks verwendet werden, wie Getränkeflaschen einschließlich Verschlüssen und Deckeln; insbesondere Getränkebehälter mit einem Fassungsvermögen von bis zu 3 Litern, d. h. Behältnisse, die zur Aufnahme von Flüssigkeiten verwendet werden, wie Getränkeflaschen, einschließlich ihrer Verschlüsse und Deckel und Verbundgetränkeverpackungen einschließlich ihrer Verschlüsse und Deckel.

In einer bevorzugten Ausführungsform umfasst der erfindungsgemäße Gebrauchsgegenstand eine gegen Wasser und Feuchtigkeit beständige Beschichtung und/oder Antihaftbeschichtung. Bevorzugte Beschichtungsmaterialien sind Polytetrafluorethylen (PTFE), Perfluoralkoxy (PFA), Fluorethylenpropylen (FEP), Polyethylen (PE) und Polymilchsäure (PLA).

In einer bevorzugten Ausführungsform umfasst der erfindungsgemäße Gebrauchsgegenstand eine hydrophobisierende Beschichtung, vorzugsweise auf Basis natürlicher, filmbildender Polymere. Bevorzugte natürliche filmbildende Polymere sind Bienenwachs, Carnaubawachs, oder andere biobasierte Additive.

In einer bevorzugten Ausführungsform ist der Gebrauchsgegenstand spülmaschinenbeständig gemäß DIN EN 12875-1:2005-08.

In bevorzugten Ausführungsformen sind die erfindungsgemäßen Gebrauchsgegenstände zur mehrfachen Verwendung bestimmt, ohne dass diese dabei beschädigt werden oder sich das Material verändert, bevorzugt mindestens zweimal, bevorzugter mindestens 125 mal, noch bevorzugter mindestens 500 mal und besonders bevorzugt mindesten 1000 mal. Es ist jedoch grundsätzlich auch möglich, die erfindungsgemäßen Gebrauchsgegenstände nur einmal zu verwenden.

In einer weiteren bevorzugten Ausführungsform ist der Gebrauchsgegenstand mikrowellenbeständig gemäß DIN EN 15284:2007-07 und/oder temperaturwechselbeständig gemäß DIN EN 1183:1997-08.

In bevorzugten Ausführungsformen können die erfindungsgemäßen Gebrauchsgegenstände daher im Backofen und oder der Mikrowelle erhitzt werden, ohne dass diese dabei beschädigt werden oder sich das Material verändert, bevorzugt bis zu einer Temperatur von mindestens 50 °C, mindestens 75 °C, mindestens 100 °C, mindestens 125 °C, mindestens 150 °C, mindestens 175 °C, mindestens 200 °C, mindestens 225 °C, mindestens 250 °C, mindestens 275 °C oder mindestens 300 °C.

Der erfindungsgemäße Gebrauchsgegenstand enthält einen Naturfaserverbundwerkstoff, welcher aus Zuckerrüben gewonnene Partikel umfasst, die bevorzugt in eine Polymermatrix eingebettet sind. In einer bevorzugten Ausführungsform besteht der erfindungsgemäße Gebrauchsgegenstand im Wesentlichen aus dem Naturfaserverbundwerkstoff. In einer bevorzugten Ausführungsform besteht der Naturfaserverbundwerkstoff im Wesentlichen aus den Zuckerrüben gewonnenen Partikeln sowie der Polymermatrix. Zum Zwecke der Beschreibung bedeutet "im Wesentlichen" bevorzugt zum mindestens 90 Gew.-%, bevorzugter zu mindestens 95 Gew.-%, noch bevorzugter zu mindestens 99 Gew.-%, am bevorzugtesten bis zu 100 Gew.-%.

Ein Naturfaserverbundwerkstoff im Sinne der Erfindung umfasst im Allgemeinen bevorzugt mindestens zwei Hauptkomponenten (eine Polymermatrix sowie Fasern welche in die Polymermatrix eingebettet sind). Naturfaserverbundwerkstoffe sind Mehrphasen- oder Mischwerkstoffe. Durch gegenseitige Wechselwirkungen der beiden Komponenten erhält dieser Werkstoff höherwertige Eigenschaften als jede der beiden einzeln beteiligten Komponenten.

Dabei kann der erfindungsgemäße Naturfaserverbundwerkstoff als Halbfertigerzeugnis (Zwischenprodukt) vorliegen, welcher durch geeignete Methoden, insbesondere Thermoformen wie z.B. Schmelzextrusion, Spritzguss, Pultrusion, Pressen, etc. anschließend zu einem Formteil als Endprodukt geformt werden kann. Dies ist insbesondere dann möglich, wenn die Polymermatrix im Wesentlichen thermoplastische Polymere oder noch nicht vollständig gehärtete duroplastische Polymere umfasst. In diesem Fall kann der erfindungsgemäße Naturfaserverbundwerkstoff bevorzugt aus den erfindungsgemäßen Partikeln, einer geeigneten Polymermatrix, ggf. einem oder mehreren Haftvermittlern und ggf. weiteren Zuschlagsstoffen in geeigneter Form bereitgestellt werden, wie sie für die weitere Verarbeitung, insbesondere durch Thermoformen zweckmäßig ist. Beispielsweise kann der erfindungsgemäße Naturfaserverbundwerkstoff als Pulver, Granulat oder in Form von Pellets vorliegen.

Alternativ ist es jedoch auch möglich, dass die erfindungsgemäßen Partikel in einem oder in mehreren konzertierten Arbeitsschritten direkt zu einem endgültigen Formteil aus Naturfaserverbundwerkstoff umgesetzt werden, ohne dass während des Verfahrens ein Naturfaserverbundwerkstoff als Halbfertigerzeugnis isoliert wird. Beispielsweise können die erfindungsgemäßen Partikel alternativ mit einer geeigneten Polymermatrix, ggf. einem oder mehreren Haftvermittlern und ggf. weiteren Zuschlagsstoffen in einem Schmelzextruder gemischt und durch Extrusion bereits in die endgültige, gewünschte Form des gewünschten Formteils (Endprodukt) gebracht werden.

Zum Zwecke der Beschreibung umfasst, sofern im Einzelfall nicht ausdrücklich etwas anderes definiert wird, der Begriff "Naturfaserverbundwerkstoff" grundsätzlich beide Möglichkeiten (sowohl Halbfertigerzeugnis als auch Endprodukt) und der Begriff "Formteil" nur das Endprodukt (d.h. kein Halbfertigerzeugnis), wobei jeweils nicht ausgeschlossen ist, dass dieses Endprodukt anschließend ggf. weiteren Behandlungsschritten unterzogen werden kann.

Der erfindungsgemäße Naturfaserverbundwerkstoff umfasst aus Zuckerrüben gewonnene Partikel und eine Polymermatrix, wobei die Partikel in die Polymermatrix eingebettet sind.

In bevorzugten Ausführungsformen umfasst die Polymermatrix ein Biopolymer oder besteht daraus, wobei das Biopolymer ein nicht modifiziertes natürliches Polymer gemäß der Definition des Begriffs "nicht chemisch veränderter Stoff" in Artikel 3 Nummer 40 der Verordnung (EG) Nr. 1907/2006 des Europäischen Parlaments und des Rates ist (vgl. *Verordnung (EG) Nr. 1907*/*2006 des Europäischen Parlaments und des Rates vom 18. Dezember 2006 zur Registrierung, Bewertung, Zulassung und Beschränkung chemischer Stoffe (REACH), zur Schaffung einer Europäischen Chemikalienagentur, zur Änderung der Richtlinie 1999*/*45*/*EG und zur Aufhebung der Verordnung (EWG) Nr. 793*/*93 des Rates, der Verordnung (EG) Nr. 1488*/*94 der Kommission, der Richtlinie 76*/*769*/*EWG des Rates sowie der Richtlinien 91*/*155*/*EWG, 93*/*67*/*EWG, 93*/*105*/*EG und 2000*/*21*/*EG der Kommission (ABl. L 396 vom 30.12.2006, S. 1)*.).

Keine Biopolymere im Sinne der Erfindung sind bevorzugt insbesondere aus modifizierten natürlichen Polymeren oder aus biobasierten, fossilen oder synthetischen Ausgangsstoffen hergestellte Kunststoffe, welche in der Natur nicht vorkommen. Dies gilt ebenso für Produkte aus mit Zusatzstoffen versehenen Kunststoffen, die durch Oxidation einen Zerfall des Kunststoffs in Mikropartikel oder einen chemischen Abbau herbeiführen (sog. oxo-abbaubare Kunststoffe).

In bevorzugten Ausführungsformen umfasst die Polymermatrix ein Biopolymer oder besteht daraus, wobei das Biopolymer bevorzugt ausgewählt ist aus der Gruppe umfassend Stärke, Cellulose, Cellulosederivate, Lignin, Polymilchsäure, Polyhydroxyfettsäure, Chitin, Chitosan und Protein.

Das erfindungsgemäße Biopolymer ist bevorzugt ein natives Biopolymer, d.h. das Biopolymer kommt als solches in der Natur vor und ist chemisch nicht modifiziert (biogenes Biopolymer; natürliches Polymer, das nicht chemisch modifiziert wurde). Bevorzugte erfindungsgemäße Biopolymere sind ausgewählt ist aus der Gruppe bestehend aus
- Polysacchariden;
- Polyhydroxyalkanoaten;
- Lignin;
- Proteinen, Peptiden;
   sowie deren Mischungen.

Ein erfindungsgemäß bevorzugtes Polyhydroxyalkanoat ist Polyhydroxybutyrat (PHB).

Besonders bevorzugte erfindungsgemäße Biopolymere sind Polysaccharide.

In bevorzugten Ausführungsformen ist das Biopolymer ein Polysaccharid ausgewählt aus
- α-Polysacchariden (bevorzugt Stärke, Pektine);
- β-Polysacchariden (bevorzugt Cellulose, Chitin, Chitosan);
   sowie deren Mischungen.

In bevorzugten Ausführungsformen ist das Biopolymer ein Polysaccharid ausgewählt aus
- Homoglykanen (bevorzugt Stärke [Amylose, Amylopektin], Cellulose, Chitin);
- Heteroglykanen (bevorzugt Xanthan, Hyaluronsäure);
   sowie deren Mischungen.

In bevorzugten Ausführungsformen ist das Biopolymer ausgewählt aus der Gruppe bestehend aus
(a) Pektin; vorzugsweise ausgewählt aus der Gruppe bestehend aus
   - hochverestertem Pektin (Veresterungsgrad > 50%), niederverestertem Pektin (Veresterungsgrad 5-50%), niederverestertem amidiertem Pektin (Veresterungsgrad 5-50%) oder Pektinsäure (Veresterungsgrad < 5%); und/oder
   - Zuckerrübenpektin, Apfelpektin, Hagebuttenpektin, Quittenpektin, Orangenpektin, Zitronenpektin, Limettenpektin, Grapefruitpektin, Aprikosenpektin, Mirabellenpektin, Nektarinenpektin, Pfirsichpektin, Pflaumenpektin, Zwetschgenpektin, Brombeerpektin, Himbeerpektin, rotes Johannisbeerpektin, schwarzes Johannisbeerpektin, Stachelbeerpektin, Kirschpektin, Bananenpektin, Sonnenblumenpektin, Preiselbeerpektin und Möhrenpektin;
(b) Stärke (Amylose, Amylopektin), vorzugsweise ausgewählt aus der Gruppe bestehend aus
   - Stärke mit einem Amylosegehalt von 10 bis 30%, Stärke mit einem Amylosegehalt von 30 bis 50% und Stärke mit einem Amylosegehalt von 50 bis 80%; und/oder
   - Kartoffelstärke, Süßkartoffelstärke, Maniokstärke, Gerstenstärke, Maisstärke, Roggenstärke, Sorghumstärke, Reisstärke, Triticalestärke, Weizenstärke und Erbsenstärke;
(c) Glycogen;
(d) Cellulose, Cellulosederivate, Hemicellulose, Lignocellulose;
(f) Lignin;
(g) Polyhydroxyfettsäuren;
(h) Chitin;
(j) Chitosan;
(i) Peptiden und Proteinen;
(j) Nukleinsäuren;
(k) Lipiden;
(l) Cutin;
(m) Suberin;
sowie deren Mischungen.

In besonders bevorzugten Ausführungsformen umfasst die Polymermatrix native Stärke (natürliche Stärke) oder besteht daraus. Dabei beträgt der Gewichtsanteil der aus Zuckerrüben gewonnenen Partikel bevorzugt 60±20 Gew.-%, bevorzugter 60±10 Gew.-%, und der Gewichtsanteil der nativen Stärke bevorzugt 40±20 Gew.-%, bevorzugter 40±10 Gew.-%, jeweils bezogen auf das Gesamtgewicht des Gebrauchsgegenstands. Die native Stärke ist bevorzugt ausgewählt aus der Gruppe bestehend aus Kartoffelstärke, Süßkartoffelstärke, Maniokstärke, Gerstenstärke, Maisstärke, Roggenstärke, Sorghumstärke, Reisstärke, Triticalestärke, Weizenstärke und Erbsenstärke.

In besonders bevorzugten Ausführungsformen umfasst die Polymermatrix Pektin oder besteht daraus. Dabei beträgt der Gewichtsanteil der aus Zuckerrüben gewonnenen Partikel bevorzugt 60±20 Gew.-%, bevorzugter 60±10 Gew.-%, und der Gewichtsanteil des Pektins bevorzugt 40±20 Gew.-%, bevorzugter 40±10 Gew.-%, jeweils bezogen auf das Gesamtgewicht des Gebrauchsgegenstands. Das Pektin ist bevorzugt ausgewählt aus der Gruppe bestehend aus Zuckerrübenpektin, Apfelpektin, Hagebuttenpektin, Quittenpektin, Orangenpektin, Zitronenpektin, Limettenpektin, Grapefruitpektin, Aprikosenpektin, Mirabellenpektin, Nektarinenpektin, Pfirsichpektin, Pflaumenpektin, Zwetschgenpektin, Brombeerpektin, Himbeerpektin, rotes Johannisbeerpektin, schwarzes Johannisbeerpektin, Stachelbeerpektin, Kirschpektin, Bananenpektin, Sonnenblumenpektin, Preiselbeerpektin und Möhrenpektin.

In anderen bevorzugten Ausführungsformen umfasst die Polymermatrix ein Polymer ausgewählt aus der Gruppe bestehend aus thermoplastischen Polymeren und duroplastischen Polymeren. In anderen bevorzugten Ausführungsformen umfasst die Polymermatrix kein synthetisches Polymer ausgewählt aus der Gruppe bestehend aus thermoplastischen Polymeren und duroplastischen Polymeren.

Beispiele (synthetischer) thermoplastischer Polymere umfassen Polyolefine, Polyethylen, Polypropylen, Polystyrol, Polyvinylchlorid, Polyamide, Polyester, Polyethylenterephthalat, Polylactat, Polylactid, Polycarbonat, Polyacrylate, Polyacrylnitril, Polymethyl(meth)acrylat, Polyvinylacetat, Acrylnitril-Butadien-Styrol, Polyetheretherketon, sowie deren Mischungen und Copolymerisate. Polyethylen, Polypropylen, Polystyrol, Polycarbonat und Polyamide sind besonders bevorzugt.

In einer besonders bevorzugten Ausführungsform umfasst die Polymermatrix oder besteht die Polymermatrix aus biologisch abbaubaren Polymeren.

Biologisch abbaubare Polymere umfassen Polyester, Polyesteramide, Polyurethane, Polyvinylalkohole, und Polymere auf Basis von Cellulose. Sie können jeweils ggf. bevorzugt als Gemisch mit thermoplastischer Stärke eingesetzt werden. Bevorzugte biologisch abbaubare Polyester sind Polymilchsäure oder Polyhydroxybuttersäure.

Beispiele duroplastischer Polymere (Kunstharze) umfassen reaktive Komponenten, ggf. als Mehrkomponentensysteme, welche ggf. unter Einfluss von Strahlung, Wärme oder anderen äußeren Einflüssen dreidimensionale Netzwerke bilden und aushärten. Bevorzugte Beispiele umfassen, sind jedoch nicht eingeschränkt auf Phenolharze, Aminoplaste (insbesondere Harnstoff-Formaldehyd-Harze und Melamin-Formaldehyd-Harze), Epoxidharze, Polyesterharze, ABS-Harze sowie deren Mischungen und Copolymerisate. Epoxidharze und Phenolharze sind besonders bevorzugt.

In bevorzugten Ausführungsformen beträgt der Gehalt der Polymermatrix mindestens 5 Gew.-%, mindestens 10 Gew.-%, mindestens 15 Gew.-%, mindestens 20 Gew.-%, mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-%, mindestens 60 Gew.-%, mindestens 65 Gew.-%, mindestens 70 Gew.-%, mindestens 75 Gew.-%, mindestens 80 Gew.-%, mindestens 85 Gew.-%, mindestens 90 Gew.-%, oder mindestens 95 Gew.-%, jeweils bezogen auf das Gesamtgewicht des Naturfaserverbundwerkstoffs; bevorzugt mindestens 20 Gew.-%, bevorzugter mindestens 30 Gew.-%.

In bevorzugten Ausführungsformen beträgt der Gehalt der Polymermatrix höchstens 95 Gew.-%, höchstens 90 Gew.-%, höchstens 85 Gew.-%, höchstens 80 Gew.-%, höchstens 75 Gew.-%, höchstens 70 Gew.-%, höchstens 65 Gew.-%, höchstens 60 Gew.-%, höchstens 55 Gew.-%, höchstens 50 Gew.-%, höchstens 45 Gew.-%, höchstens 40 Gew.-%, höchstens 35 Gew.-%, höchstens 30 Gew.-%, höchstens 25 Gew.-%, höchstens 20 Gew.-%, höchstens 15 Gew.-%, höchstens 10 Gew.-%, oder höchstens 5 Gew.-%, jeweils bezogen auf das Gesamtgewicht des Naturfaserverbundwerkstoffs; bevorzugt höchstens 60 Gew.-%, bevorzugter höchstens 50 Gew.-%.

Bevorzugt liegt der Gehalt der Polymermatrix im Bereich von 0 bis 99,9 Gew.-%, bevorzugt 20 bis 99,9 Gew.-%, bezogen auf das Gesamtgewicht des Naturfaserverbundwerkstoffs. In bevorzugten Ausführungsformen liegt der Gehalt der Polymermatrix im Bereich von 10±5 Gew.-%; 20±15 Gew.-%, 20±10 Gew.-%, 20±5 Gew.-%; 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, 70±5 Gew.-%; 80±15 Gew.-%, 80±10 Gew.-%, 80±5 Gew.-%; oder 90±5 Gew.-%; jeweils bezogen auf das Gesamtgewicht des Naturfaserverbundwerkstoffs; bevorzugt im Bereich von 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, oder 50±5 Gew.-%.

Der erfindungsgemäße Gebrauchsgegenstand, bevorzugte der erfindungsgemäße Naturfaserverbundwerkstoff, umfasst aus Zuckerrüben gewonnene Partikel. Bevorzugt sind die Partikel in die Polymermatrix eingebettet.

Die Partikel wurden aus Zuckerrüben gewonnen. Dabei wurden die Zuckerrüben bevorzugt zur primären Gewinnung von Saccharose angebaut und der Großteil der Saccharose wurde dabei von den Partikeln abgetrennt. Dennoch umfassen die erfindungsgemäßen Partikel üblicherweise Restmengen an Saccharose.

Bevorzugt beträgt der Gehalt an Saccharose in den Partikeln höchstens 25 Gew.-%, bevorzugter höchstens 20 Gew.-%, noch bevorzugter höchstens 15 Gew.-%, am bevorzugtesten höchstens 10 Gew.-%, und insbesondere höchstens 5 Gew.-%, jeweils bezogen auf das Trockengewicht der Partikel; und wobei mindestens 30 Gew.-%, bevorzugter mindestens 40 Gew.-%, noch bevorzugter mindestens 50 Gew.-%, am bevorzugtesten mindestens 60 Gew.-%, und insbesondere mindestens 70 Gew.-% der Partikel, jeweils bezogen auf das Gesamtgewicht der Partikel.

Bevorzugt weisen die Partikel eine Korngröße im Bereich von 30 bis 800 µm auf.

Die Partikel können sphärisch sein oder aber auch andere Formen aufweisen, z.B. Zylinder, oder auch faserig sein.

Die erfindungsgemäßen Partikel umfassen Partikel welche aus Zuckerrüben gewonnen wurden. Demzufolge können die erfindungsgemäßen Partikel neben den aus Zuckerrüben gewonnenen Partikeln auch andere Partikel enthalten. In einer bevorzugten Ausführungsform bestehen die erfindungsgemäßen Partikel im Wesentlichen aus Partikeln, welche aus Zuckerrüben gewonnen wurden.

Erfindungsgemäß handelt es sich bevorzugt bei den Zuckerrüben (*Beta vulgaris*) um solche Arten, welche vorzugsweise zur Gewinnung von Saccharose angebaut werden. Erfindungsgemäß werden bevorzugt die Reste der Zuckerrüben eingesetzt, welche nach Abtrennung des Großteils der ursprünglich enthaltenen Saccharose, üblicherweise durch wässrige Extraktion, zurückbleiben. Häufig liegen diese Reste der Zuckerrüben in Form von sog. Zuckerrübenschnitzeln vor.

Aus diesem Grund ist auch der Restgehalt an Saccharose, welche nicht aus den Zuckerrüben gewonnen werden konnte, in den Partikeln gering und beträgt höchstens 25 Gew.-%, bevorzugter höchstens 20 Gew.-%, noch bevorzugter höchstens 15 Gew.-%, am bevorzugtesten höchstens 10 Gew.-%, und insbesondere höchstens 5 Gew.-%, jeweils bezogen auf das Trockengewicht der Partikel.

Auch der Gehalt an anderen Mono- und Disacchariden, welche von Saccharose verschieden sind und in den Partikeln ggf. enthalten sein können, ist vorzugsweise gering.

Bevorzugt beträgt der Gehalt an Glukose in den Partikeln höchstens 5,0 Gew.-%, bevorzugter höchstens 4,0 Gew.-%, noch bevorzugter höchstens 3,0 Gew.-%, am bevorzugtesten höchstens 2,0 Gew.-%, und insbesondere höchstens 1,0 Gew.-%, jeweils bezogen auf das Trockengewicht der Partikel.

Bevorzugt beträgt der Gehalt an Fruktose in den Partikeln höchstens 5,0 Gew.-%, bevorzugter höchstens 4,0 Gew.-%, noch bevorzugter höchstens 3,0 Gew.-%, am bevorzugtesten höchstens 2,0 Gew.-%, und insbesondere höchstens 1,0 Gew.-%, jeweils bezogen auf das Trockengewicht der Partikel.

Die erfindungsgemäßen Partikel können Lignin enthalten, wobei der Gehalt an Lignin allerdings bevorzugt vergleichsweise gering ist. Bevorzugt beträgt der Gehalt an Lignin in den Partikeln höchstens 5,0 Gew.-%, bevorzugter höchstens 4,0 Gew.-%, noch bevorzugter höchstens 3,5 Gew.-%, am bevorzugtesten höchstens 3,0 Gew.-%, und insbesondere höchstens 2,5 Gew.-%, jeweils bezogen auf das Trockengewicht der Partikel.

Die erfindungsgemäßen Partikel enthalten typischerweise Cellulose und Hemicellulose, welche wenigstens teilweise in Form von Fasern vorliegen. Durch diese Fasern eignet sich die erfindungsgemäße Zusammensetzung insbesondere zur Herstellung von Naturfaserverbundwerkstoffen.

Zuckerrüben haben von Natur aus einen vergleichsweise hohen Gehalt an Pektin.

Bevorzugt weisen die erfindungsgemäßen Partikel den Gehalt an Pektin auf, wie er nach Extraktion der Saccharose in den Zuckerrübenschnitzeln zurückbleibt, d.h. werden zur Verringerung des Gehalts an Pektin nicht besonders behandelt. Bevorzugt liegt der Gehalt an Pektin im Bereich von 14 bis 34 Gew.-%, bevorzugter 16 bis 32 Gew.-%, noch bevorzugter 18 bis 30 Gew.-%, am bevorzugtesten 20 bis 28 Gew.-%, und insbesondere 22 bis 26 Gew.-%, jeweils bezogen auf das Trockengewicht der Partikel.

Bevorzugt beträgt der Gehalt an Cellulose in den Partikeln mindestens 2,5 Gew.-%, bevorzugter mindestens 5,0 Gew.-%, noch bevorzugter mindestens 10 Gew.-%, am bevorzugtesten mindestens 15 Gew.-%, und insbesondere mindestens 20 Gew.-%, jeweils bezogen auf das Trockengewicht der Partikel.

Bevorzugt beträgt der Gehalt an Cellulose in den Partikeln höchstens 45 Gew.-%, bevorzugter höchstens 40 Gew.-%, noch bevorzugter höchstens 35 Gew.-%, am bevorzugtesten höchstens 30 Gew.-%, und insbesondere höchstens 25 Gew.-%, jeweils bezogen auf das Trockengewicht der Partikel.

Bevorzugt liegt der Gehalt an Cellulose in den Partikeln im Bereich von 22±15 Gew.-%, bevorzugter 22±12 Gew.-%, noch bevorzugter 22±9 Gew.-%, am bevorzugtesten 22±6 Gew.-%, und insbesondere 22±3 Gew.-%, jeweils bezogen auf das Trockengewicht der Partikel.

Bevorzugt beträgt der Gehalt an Hemicellulose in den Partikeln mindestens 2,5 Gew.-%, bevorzugter mindestens 5,0 Gew.-%, noch bevorzugter mindestens 10 Gew.-%, am bevorzugtesten mindestens 15 Gew.-%, und insbesondere mindestens 20 Gew.-%, jeweils bezogen auf das Trockengewicht der Partikel.

Bevorzugt beträgt der Gehalt an Hemicellulose in den Partikeln höchstens 45 Gew.-%, bevorzugter höchstens 40 Gew.-%, noch bevorzugter höchstens 35 Gew.-%, am bevorzugtesten höchstens 30 Gew.-%, und insbesondere höchstens 25 Gew.-%, jeweils bezogen auf das Trockengewicht der Partikel.

Bevorzugt liegt der Gehalt an Hemicellulose in den Partikeln im Bereich von 22±15 Gew.-%, bevorzugter 22±12 Gew.-%, noch bevorzugter 22±9 Gew.-%, am bevorzugtesten 22±6 Gew.-%, und insbesondere 22±3 Gew.-%, jeweils bezogen auf das Trockengewicht der Partikel.

Die Partikel können für die verschiedenen Anforderungsprofile an die Restfeuchte unterschiedliche Feuchtegrade aufweisen, welche ggf. durch Trocknen unter geeigneten Bedingungen eingestellt werden können.

In bevorzugten Ausführungsformen weisen die Partikel einen Wassergehalt von höchstens 10 Gew.-%, höchstens 9,0 Gew.-%, höchstens 8,0 Gew.-%, höchstens 7,0 Gew.-%, höchstens 6,0 Gew.-%, höchstens 5,0 Gew.-%, höchstens 4,0 Gew.-%, höchstens 3,0 Gew.-%, höchstens 2,0 Gew.-%, oder höchstens 1,0 Gew.-% auf. jeweils in Bezug auf das Gesamtgewicht der Partikel.

In bevorzugten Ausführungsformen liegt der Wassergehalt im Bereich von 5,0±4,9 Gew.-%, oder 7,5±7,4 oder 7,5±5,0 Gew.-%, jeweils bezogen auf das Gesamtgewicht der Partikel.

Die erfindungsgemäßen Partikel können Rohprotein enthalten (*crude protein*).

Bevorzugt beträgt der Gehalt an Rohprotein in den Partikeln mindestens 1,0 Gew.-%, bevorzugter mindestens 3,0 Gew.-%, noch bevorzugter mindestens 5,0 Gew.-%, am bevorzugtesten mindestens 7,0 Gew.-%, und insbesondere mindestens 9,0 Gew.-%, jeweils bezogen auf das Trockengewicht der Partikel.

Bevorzugt beträgt der Gehalt an Rohprotein in den Partikeln höchstens 18 Gew.-%, bevorzugter höchstens 16 Gew.-%, noch bevorzugter höchstens 14 Gew.-%, am bevorzugtesten höchstens 12 Gew.-%, und insbesondere höchstens 10 Gew.-%, jeweils bezogen auf das Trockengewicht der Partikel.

Bevorzugt liegt der Gehalt an Rohprotein in den Partikeln im Bereich von 10±9 Gew.-%, bevorzugter 10±8 Gew.-%, noch bevorzugter 10±7 Gew.-%, am bevorzugtesten 10±6 Gew.-%, und insbesondere 10±5 Gew.-%, jeweils bezogen auf das Trockengewicht der Partikel.

Erfindungsgemäß bevorzugt weisen mindestens 30 Gew.-%, bevorzugter mindestens 40 Gew.-%, noch bevorzugter mindestens 50 Gew.-%, am bevorzugtesten mindestens 60 Gew.-%, und insbesondere mindestens 70 Gew.-% der Partikel, jeweils bezogen auf das Gesamtgewicht der Partikel, eine Korngröße im Bereich von 30 bis 800 µm auf.

Dabei wird die Korngröße vorzugsweise durch Siebanalyse (Siebklassieren) bestimmt. Hierbei wird ein Satz mit nach unten immer feiner werdenden Sieben aufeinander gesetzt. Die zu analysierende Probe wird in das oberste Sieb eingefüllt und der Siebsatz anschließend in eine Siebmaschine eingespannt. Die Maschine rüttelt oder vibriert dann den Siebsatz für einen gewissen Zeitraum, wobei ein Sichter die Kornbestandteile trennt.

Ein Partikel, welcher eine Korngröße im Bereich von 30 bis 800 µm aufweist, passiert ein Sieb mit einer Maschenweite von 801 µm und wird von einem Sieb mit einer Maschenweite von 30 µm zurückgehalten.

In bevorzugten Ausführungsformen weisen
- mindestens 2,0 Gew.-%, bevorzugter mindestens 4,0 Gew.-%, noch bevorzugter mindestens 6,0 Gew.-%, am bevorzugtesten mindestens 8,0 Gew.-%, und insbesondere mindestens 10 Gew.-% der Partikel, jeweils bezogen auf das Gesamtgewicht der Partikel, eine Korngröße von weniger als 30 µm auf; und/oder
- mindestens 1,5 Gew.-%, bevorzugter mindestens 3,0 Gew.-%, noch bevorzugter mindestens 4,5 Gew.-%, am bevorzugtesten mindestens 6,0 Gew.-%, und insbesondere mindestens 7,5 Gew.-% der Partikel, jeweils bezogen auf das Gesamtgewicht der Partikel, eine Korngröße im Bereich von 30 bis 200 µm auf; und/oder
- mindestens 2,0 Gew.-%, bevorzugter mindestens 4,0 Gew.-%, noch bevorzugter mindestens 6,0 Gew.-%, am bevorzugtesten mindestens 8,0 Gew.-%, und insbesondere mindestens 11 Gew.-% der Partikel, jeweils bezogen auf das Gesamtgewicht der Partikel, eine Korngröße im Bereich von 201 bis 315 µm auf; und/oder
- mindestens 5,0 Gew.-%, bevorzugter mindestens 10 Gew.-%, noch bevorzugter mindestens 15 Gew.-%, am bevorzugtesten mindestens 20 Gew.-%, und insbesondere mindestens 25 Gew.-% der Partikel, jeweils bezogen auf das Gesamtgewicht der Partikel, eine Korngröße im Bereich von 316 bis 500 µm auf; und/oder
- mindestens 7,5 Gew.-%, bevorzugter mindestens 15 Gew.-%, noch bevorzugter mindestens 22,5 Gew.-%, am bevorzugtesten mindestens 30 Gew.-%, und insbesondere mindestens 37,5 Gew.-% der Partikel, jeweils bezogen auf das Gesamtgewicht der Partikel, eine Korngröße im Bereich von 501 bis 800 µm auf; und/oder
- mindestens 0,5 Gew.-%, bevorzugter mindestens 1,0 Gew.-%, noch bevorzugter mindestens 1,5 Gew.-%, am bevorzugtesten mindestens 2,0 Gew.-%, und insbesondere mindestens 2,5 Gew.-% der Partikel, jeweils bezogen auf das Gesamtgewicht der Partikel, eine Korngröße im Bereich von 801 bis 1000 µm auf; und/oder
- mindestens 0,2 Gew.-%, bevorzugter mindestens 0,4 Gew.-%, noch bevorzugter mindestens 0,6 Gew.-%, am bevorzugtesten mindestens 0,8 Gew.-%, und insbesondere mindestens 1,0 Gew.-% der Partikel, jeweils bezogen auf das Gesamtgewicht der Partikel, eine Korngröße von mehr als 1000 µm auf.

In anderen bevorzugten Ausführungsformen weisen
- höchstens 20 Gew.-%, bevorzugter höchstens 18 Gew.-%, noch bevorzugter höchstens 16 Gew.-%, am bevorzugtesten höchstens 14 Gew.-%, und insbesondere höchstens 12 Gew.-% der Partikel, jeweils bezogen auf das Gesamtgewicht der Partikel, eine Korngröße von weniger als 30 µm auf; und/oder
- höchstens 13,5 Gew.-%, bevorzugter höchstens 12 Gew.-%, noch bevorzugter höchstens 10,5 Gew.-%, am bevorzugtesten höchstens 9,0 Gew.-%, und insbesondere höchstens 8,5 Gew.-% der Partikel, jeweils bezogen auf das Gesamtgewicht der Partikel, eine Korngröße im Bereich von 30 bis 200 µm auf; und/oder
- höchstens 23 Gew.-%, bevorzugter höchstens 21 Gew.-%, noch bevorzugter höchstens 19 Gew.-%, am bevorzugtesten höchstens 17 Gew.-%, und insbesondere höchstens 15 Gew.-% der Partikel, jeweils bezogen auf das Gesamtgewicht der Partikel, eine Korngröße im Bereich von 201 bis 315 µm auf; und/oder
- höchstens 45 Gew.-%, bevorzugter höchstens 40 Gew.-%, noch bevorzugter höchstens 35 Gew.-%, am bevorzugtesten höchstens 30 Gew.-%, und insbesondere höchstens 25 Gew.-% der Partikel, jeweils bezogen auf das Gesamtgewicht der Partikel, eine Korngröße im Bereich von 316 bis 500 µm auf; und/oder
- höchstens 72,5 Gew.-%, bevorzugter höchstens 65 Gew.-%, noch bevorzugter höchstens 57,5 Gew.-%, am bevorzugtesten höchstens 50 Gew.-%, und insbesondere höchstens 42,5 Gew.-% der Partikel, jeweils bezogen auf das Gesamtgewicht der Partikel, eine Korngröße im Bereich von 501 bis 800 µm auf; und/oder
- höchstens 5,5 Gew.-%, bevorzugter höchstens 5,0 Gew.-%, noch bevorzugter höchstens 4,5 Gew.-%, am bevorzugtesten höchstens 4,0 Gew.-%, und insbesondere höchstens 3,5 Gew.-% der Partikel, jeweils bezogen auf das Gesamtgewicht der Partikel, eine Korngröße im Bereich von 801 bis 1000 µm auf; und/oder
- höchstens 1,8 Gew.-%, bevorzugter höchstens 1,6 Gew.-%, noch bevorzugter höchstens 1,4 Gew.-%, am bevorzugtesten höchstens 1,2 Gew.-%, und insbesondere höchstens 1,0 Gew.-% der Partikel, jeweils bezogen auf das Gesamtgewicht der Partikel, eine Korngröße von mehr als 1000 µm auf.

In weiteren bevorzugten Ausführungsformen weisen
- 11±9,0 Gew.-%, bevorzugter 11±7,0 Gew.-%, noch bevorzugter 11±5,0 Gew.-%, am bevorzugtesten 11±3,0 Gew.-%, und insbesondere 11±2,0 Gew.-% der Partikel, jeweils bezogen auf das Gesamtgewicht der Partikel, eine Korngröße von weniger als 30 µm auf; und/oder
- 8,0±7,0 Gew.-%, bevorzugter 8,0±6,0 Gew.-%, noch bevorzugter 8,0±5,0 Gew.-%, am bevorzugtesten 8,0±4,0 Gew.-%, und insbesondere 8,0±3,0 Gew.-% der Partikel, jeweils bezogen auf das Gesamtgewicht der Partikel, eine Korngröße im Bereich von 30 bis 200 µm auf; und/oder
- 13±12 Gew.-%, bevorzugter 13±10 Gew.-%, noch bevorzugter 13±8,0 Gew.-%, am bevorzugtesten 13±6,0 Gew.-%, und insbesondere 13±4,0 Gew.-% der Partikel, jeweils bezogen auf das Gesamtgewicht der Partikel, eine Korngröße im Bereich von 201 bis 315 µm auf; und/oder
- 25±22 Gew.-%, bevorzugter 25±19 Gew.-%, noch bevorzugter 25±16 Gew.-%, am bevorzugtesten 25±13 Gew.-%, und insbesondere 25±10 Gew.-% der Partikel, jeweils bezogen auf das Gesamtgewicht der Partikel, eine Korngröße im Bereich von 316 bis 500 µm auf; und/oder
- 40±35 Gew.-%, bevorzugter 40±30 Gew.-%, noch bevorzugter 40±25 Gew.-%, am bevorzugtesten 40±20 Gew.-%, und insbesondere 40±15 Gew.-% der Partikel, jeweils bezogen auf das Gesamtgewicht der Partikel, eine Korngröße im Bereich von 501 bis 800 µm auf; und/oder
- 3,0±2,5 Gew.-%, bevorzugter 3,0±2,0 Gew.-%, noch bevorzugter 3,0±1,5 Gew.-%, am bevorzugtesten 3,0±1,0 Gew.-%, und insbesondere 3,0±0,5 Gew.-% der Partikel, jeweils bezogen auf das Gesamtgewicht der Partikel, eine Korngröße im Bereich von 801 bis 1000 µm auf; und/oder
- 1,0±0,9 Gew.-%, bevorzugter 1,0±0,7 Gew.-%, noch bevorzugter 1,0±0,5 Gew.-%, am bevorzugtesten 1,0±0,3 Gew.-%, und insbesondere 1,0±0,2 Gew.-% der Partikel, jeweils bezogen auf das Gesamtgewicht der Partikel, eine Korngröße von mehr als 1000 µm auf.

Bevorzugt erfolgt die Bestimmung der Partikelgrößenverteilung gemäß DIN 66143, 66144, 66145, 66160, 66161 sowie DIN ISO 9276, wobei die Verteilung insbesondere über die Verteilungssumme Q3 bzw. den für jede Kornklasse jeweiligen Massenanteil P3 beschrieben werden kann.

Bevorzugte Partikelgrößenverteilungen in Kornklassen als Werte Q3 [%] (Verteilungssumme) sind in nachfolgender Tabelle als Ausführungsformen A¹ bis A⁵ zusammengefasst:

| Kornklasse | A¹ | A² | A³ | A⁴ | A⁵ |
|---|---|---|---|---|---|
| <112 µm | 11±10 | 11±8,0 | 11±6,0 | 11±4,0 | 11±2,0 |
| 112-200 µm | 19±18 | 19±15 | 19±12 | 19±9,0 | 19±6,0 |
| 201-315 µm | 32±31 | 32±25 | 32±19 | 32±13 | 32±7 |
| 316-500 µm | 57±40 | 57±32 | 57±24 | 57±16 | 57±8 |
| 501-800 µm | 58-100 | 65-100 | 72-100 | 77-100 | 84-100 |
| 801-1000 µm | 59-100 | 69-100 | 79-100 | 89-100 | 99-100 |
| >1000 µm | ≤100 | ≤100 | ≤100 | ≤100 | ≤100 |

Bevorzugte Partikelgrößenverteilungen in Kornklassen als Werte P3 [%] (Massenanteil) sind in nachfolgender Tabelle als Ausführungsformen B¹ bis B⁵ zusammengefasst:

| Kornklasse | B¹ | B² | B³ | B⁴ | B⁵ |
|---|---|---|---|---|---|
| <112 µm | 11±10 | 11±8,0 | 11±6,0 | 11±4,0 | 11±2,0 |
| 112-200 µm | 8,0±7,5 | 8,0±6,0 | 8,0±4,5 | 8,0±3,0 | 8,0±1,5 |
| 201-315 µm | 13±10 | 13±8,0 | 13±6,0 | 13±4,0 | 13±2,0 |
| 316-500 µm | 25±20 | 25±16 | 25±12 | 25±8,0 | 25±4,0 |
| 501-800 µm | 40±35 | 40±28 | 40±21 | 40±14 | 40±7,0 |
| 801-1000 µm | 2,7±2,5 | 2,7±2,0 | 2,7±1,5 | 2,7±1,0 | 2,7±0,5 |
| >1000 µm | <5,0 | <4,0 | <3,0 | <2,0 | <1,0 |

Die erfindungsgemäßen Partikel enthalten von Natur aus Fasern, welche die erfindungsgemäßen Partikel insbesondere zur Herstellung von Naturfaserverbundwerkstoffen geeignet machen. Dabei können die Partikel sphärisch, globulär oder ggf. auch faserig vorliegen.

Bevorzugt beträgt die mittlere Faserlänge der Fasern (gewichtsgemittelte Faserlänge) mindestens 30 µm, bevorzugter mindestens 100 µm, noch bevorzugter mindestens 200 µm, am bevorzugtesten mindestens 300 µm, und insbesondere mindestens 400 µm.

Bevorzugt beträgt die mittlere Faserlänge der Fasern (gewichtsgemittelte Faserlänge) höchstens 1000 µm, bevorzugter höchstens 900 µm, noch bevorzugter höchstens 800 µm, am bevorzugtesten höchstens 700 µm, und insbesondere höchstens 600 µm.

Bevorzugt liegt die mittlere Faserlänge der Fasern (gewichtsgemittelte Faserlänge) im Bereich von 50 bis 1000 µm bevorzugter 100 bis 900 µm, noch bevorzugter 200 bis 800 µm, am bevorzugtesten 300 bis 700 µm, und insbesondere 400 bis 600 µm.

Methoden zur Bestimmung der mittleren Faserlänge (gewichtsgemittelte Faserlänge) sind einem Fachmann bekannt. Erfindungsgemäß bevorzugt erfolgt die Bestimmung gemäß DIN ISO 22314.

Grundsätzlich ist es möglich, für die Herstellung der Partikel Zuckerrübenschnitzel einzusetzen, welche bei der Verarbeitung mit einem weiteren Nebenprodukt der Zuckergewinnung besprüht wurden. So kann insbesondere Melasse vor der Trocknung über die Zuckerrübenschnitzel gesprüht werden, um zum einen eine bessere Pressung zu Pellets und zum anderen eine alternative Eignung als Futtermittel zu ermöglichen.

Erfindungsgemäß ist es allerdings bevorzugt, wenn die Partikel aus Zuckerrübenschnitzeln hergestellt werden, welche nicht entsprechend vorbehandelt sind, insbesondere nicht mit Melasse besprüht wurden.

In einer bevorzugten Ausführungsform besteht der erfindungsgemäße Gebrauchsgegenstand oder der erfindungsgemäße Naturfaserverbundwerkstoff im Wesentlichen aus den Partikeln, welche aus Zuckerrüben gewonnen wurden. In diesem Fall beträgt der Gehalt der Partikel, welche aus Zuckerrüben gewonnen wurden, im Wesentlichen 100 Gew.-% des Naturfaserverbundwerkstoffs, bezogen auf das Gesamtgewicht des Naturfaserverbundwerkstoffs.

In einer anderen bevorzugten Ausführungsform umfassen der erfindungsgemäße Gebrauchsgegenstand oder der erfindungsgemäße Naturfaserverbundwerkstoff Zusatzpartikel, welche aus Pflanzen oder Pflanzenteilen gewonnen wurden, welche sich von Zuckerrüben unterscheiden. Als Zusatzpartikel eignen sich insbesondere solche Partikel, welche aus Holz, Flachs, Hanf, Sisal, Bagasse, Jute, Sonnenblumen und/oder Reis gewonnen wurden.

In einer anderen bevorzugten Ausführungsform umfassen der erfindungsgemäße Gebrauchsgegenstand oder der erfindungsgemäße Naturfaserverbundwerkstoff zusätzlich zu den Partikeln, welche aus Zuckerrüben gewonnen wurden, andere Inhaltsstoffe, beispielsweise funktionelle Additive wie z.B. Haftvermittler.

In einer bevorzugten Ausführungsform umfassen der erfindungsgemäße Gebrauchsgegenstand oder der erfindungsgemäße Naturfaserverbundwerkstoff zusätzlich ein weiteres funktionelles Additiv,
- welches ausgewählt ist aus der Gruppe bestehend aus Haftvermittler, Pigmente, Flammenschutzmittel, Weichmacher, Antioxidantien, Mittel gegen Parasitenbefall, Mittel gegen Fäule, Fungizide, Füllstoffe oder Mischungen davon; bevorzugt einen Haftvermittler; und/oder
- wobei der Gewichtsanteil des weiteren funktionellen Additivs im Bereich von 0,1 bis 5,0 Gew.-% liegt, bezogen auf das Gesamtgewicht des Gebrauchsgegenstands oder des Naturfaserverbundwerkstoffs.

Als Haftvermittler werden erfindungsgemäß bevorzugt modifizierte Polyolefine eingesetzt. Bevorzugt wird dazu ein Polyolefin so modifiziert, dass dieses vorher unlösliche Polyolefin in organischen Lösungsmitteln löslich ist. Zur Modifikation können beispielsweise Chlor und Maleinsäureanhydrid eingesetzt werden. Die polyolefinischen Haftvermittler selber reagieren meisten nicht mit den Bestandteilen der erfindungsgemäßen Zusammensetzung (z.B. den Fasern aus den Zuckerrübenschnitzeln), nur über das Maleinsäureanhydrid kann ggf. eine Reaktion erfolgen.

Ein bevorzugter Haftvermittler ist ein Copolymerisat aus Polypropylen und Maleinsäureanhydrid. Derartige Haftvermittler sind einem Fachmann bekannt und kommerziell erhältlich.

Bevorzugt beträgt der Gehalt des Haftvermittlers mindestens 0,1 Gew.-%, bevorzugter mindestens 0,25 Gew.-%, noch bevorzugter mindestens 0,5 Gew.-%, am bevorzugtesten mindestens 0,75 Gew.-%, und insbesondere mindestens 1,0 Gew.-%, jeweils bezogen auf das Gesamtgewicht des Gebrauchsgegenstands oder des Naturfaserverbundwerkstoffs.

Bevorzugt beträgt der Gehalt des Haftvermittlers höchstens 10 Gew.-%, bevorzugter höchstens 9,0 Gew.-%, noch bevorzugter höchstens 8,0 Gew.-%, am bevorzugtesten höchstens 7,0 Gew.-%, und insbesondere höchstens 6,0 Gew.-%, jeweils bezogen auf das Gesamtgewicht des Gebrauchsgegenstands oder des Naturfaserverbundwerkstoffs.

Bevorzugt liegt der Gehalt des ggf. umfassten Haftvermittlers im Bereich von 0,1 bis 5,0 Gew.-%, bevorzugter 0,25 bis 4,5 Gew.-%, noch bevorzugter 0,5 bis 4,0 Gew.-%, am bevorzugtesten 0,75 bis 3,5 Gew.-%, und insbesondere 1,0 bis 3,0 Gew.-%, jeweils bezogen auf das Gesamtgewicht des Gebrauchsgegenstands oder des Naturfaserverbundwerkstoffs.

Zusätzlich oder alternativ zu den Haftvermittlern kann der erfindungsgemäße Gebrauchsgegenstand, vorzugsweise der erfindungsgemäße Naturfaserverbundwerkstoff, bevorzugt auch weitere funktionelle Additive enthalten, beispielsweise Pigmente, Weichmacher, Antioxidantien, Mittel gegen Parasitenbefall, Mittel gegen Fäule, Fungizide, Füllstoffe, sowie deren Mischungen.

In bevorzugten Ausführungsformen beträgt der Gehalt der Partikel, welche aus Zuckerrüben gewonnen wurden, mindestens 5 Gew.-%, mindestens 10 Gew.-%, mindestens 15 Gew.-%, mindestens 20 Gew.-%, mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-%, mindestens 60 Gew.-%, mindestens 65 Gew.-%, mindestens 70 Gew.-%, mindestens 75 Gew.-%, mindestens 80 Gew.-%, mindestens 85 Gew.-%, mindestens 90 Gew.-%, oder mindestens 95 Gew.-%, jeweils bezogen auf das Gesamtgewicht des Gebrauchsgegenstands; bevorzugt mindestens 40 Gew.-%, bevorzugter mindestens 50 Gew.-%.

In bevorzugten Ausführungsformen beträgt der Gehalt der Partikel, welche aus Zuckerrüben gewonnen wurden, höchstens 95 Gew.-%, höchstens 90 Gew.-%, höchstens 85 Gew.-%, höchstens 80 Gew.-%, höchstens 75 Gew.-%, höchstens 70 Gew.-%, höchstens 65 Gew.-%, höchstens 60 Gew.-%, höchstens 55 Gew.-%, höchstens 50 Gew.-%, höchstens 45 Gew.-%, höchstens 40 Gew.-%, höchstens 35 Gew.-%, höchstens 30 Gew.-%, höchstens 25 Gew.-%, höchstens 20 Gew.-%, höchstens 15 Gew.-%, höchstens 10 Gew.-%, oder höchstens 5 Gew.-%, jeweils bezogen auf das Gesamtgewicht des Gebrauchsgegenstands; bevorzugt höchstens 80 Gew.-%, bevorzugter höchstens 70 Gew.-%.

In bevorzugten Ausführungsformen liegt der Gehalt der Partikel, welche aus Zuckerrüben gewonnen wurden, im Bereich von 10±5 Gew.-%; 20±15 Gew.-%, 20±10 Gew.-%, 20±5 Gew.-%; 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, 70±5 Gew.-%; 80±15 Gew.-%, 80±10 Gew.-%, 80±5 Gew.-%; oder 90±5 Gew.-%; jeweils bezogen auf das Gesamtgewicht des Gebrauchsgegenstands; bevorzugt im Bereich von 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, oder 70±5 Gew.-%.

In bevorzugten Ausführungsformen beträgt der Gesamtgehalt der Partikel, welche aus Zuckerrüben gewonnen wurden, und des Biopolymers mindestens 70 Gew.-%, mindestens 75 Gew.-%, mindestens 80 Gew.-%, mindestens 85 Gew.-%, mindestens 90 Gew.-%, oder mindestens 95 Gew.-% beträgt, jeweils bezogen auf das Gesamtgewicht des Gebrauchsgegenstands; bevorzugt mindestens 50 Gew.-%, bevorzugter mindestens 60 Gew.-%, jeweils bezogen auf das Gesamtgewicht des Gebrauchsgegenstands.

In bevorzugten Ausführungsformen beträgt der Gesamtgehalt der Partikel, welche aus Zuckerrüben gewonnen wurden, und des Biopolymers höchstens 95 Gew.-%, höchstens 90 Gew.-%, höchstens 85 Gew.-%, höchstens 80 Gew.-%, höchstens 75 Gew.-%, höchstens 70 Gew.-%, jeweils bezogen auf das Gesamtgewicht des Gebrauchsgegenstands.

In bevorzugten Ausführungsformen liegt der Gesamtgehalt der Partikel, welche aus Zuckerrüben gewonnen wurden, und des Biopolymers im Bereich von 70±30 Gew.-%, 70±25 Gew.-%, 70±20 Gew.-%, 70±15 Gew.-%, 70±10 Gew.-%, 70±5 Gew.-%; 80±20 Gew.-%, 80±15 Gew.-%, 80±10 Gew.-%, 80±5 Gew.-%; 90±10 Gew.-% oder 90±5 Gew.-% liegt; jeweils bezogen auf das Gesamtgewicht des Gebrauchsgegenstands.

Weist der erfindungsgemäße Gebrauchsgegenstand Partikel und Zusatzpartikel im Sinne der vorstehenden Definition auf, so liegt das relative Gewichtsverhältnis der Partikel zu den Zusatzpartikeln vorzugsweise im Bereich von 10:1 bis 1:10, oder 8:1 bis 1:8, oder 6:1 bis 1:6, oder 4:1 bis 1:4, oder 2:1 bis 1:2, oder 10:1 bis 1:1, oder 8:1 bis 1:1, oder 6:1 bis 1:1, oder 4:1 bis 1:1, oder 2:1 bis 1:1, oder 1:10 bis 1:1, oder 1:8 bis 1:1, oder 1:6 bis 1:1, oder 1:4 bis 1:1, oder 1:2 bis 1:1.

In bevorzugten Ausführungsformen beträgt der Gehalt der erfindungsgemäßen Partikel mindestens 5 Gew.-%, mindestens 10 Gew.-%, mindestens 15 Gew.-%, mindestens 20 Gew.-%, mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-%, mindestens 60 Gew.-%, mindestens 65 Gew.-%, mindestens 70 Gew.-%, mindestens 75 Gew.-%, mindestens 80 Gew.-%, mindestens 85 Gew.-%, mindestens 90 Gew.-%, oder mindestens 95 Gew.-%, jeweils bezogen auf das Gesamtgewicht des Naturfaserverbundwerkstoffs .

In bevorzugten Ausführungsformen beträgt der Gehalt der erfindungsgemäßen Partikel höchstens 95 Gew.-%, höchstens 90 Gew.-%, höchstens 85 Gew.-%, höchstens 80 Gew.-%, höchstens 75 Gew.-%, höchstens 70 Gew.-%, höchstens 65 Gew.-%, höchstens 60 Gew.-%, höchstens 55 Gew.-%, höchstens 50 Gew.-%, höchstens 45 Gew.-%, höchstens 40 Gew.-%, höchstens 35 Gew.-%, höchstens 30 Gew.-%, höchstens 25 Gew.-%, höchstens 20 Gew.-%, höchstens 15 Gew.-%, höchstens 10 Gew.-%, oder höchstens 5 Gew.-%, jeweils bezogen auf das Gesamtgewicht des Naturfaserverbundwerkstoffs.

Bevorzugt liegt der Gehalt der erfindungsgemäßen Partikel im Bereich von 0,1 bis 80 Gew.-%, bezogen auf das Gesamtgewicht des Naturfaserverbundwerkstoffs. In bevorzugten Ausführungsformen liegt der Gehalt der erfindungsgemäßen Partikel im Bereich von 10±5 Gew.-%; 20±15 Gew.-%, 20±10 Gew.-%, 20±5 Gew.-%; 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, 70±5 Gew.-%; 80±15 Gew.-%, 80±10 Gew.-%, 80±5 Gew.-%; oder 90±5 Gew.-%; jeweils bezogen auf das Gesamtgewicht des Naturfaserverbundwerkstoffs.

Der Gehalt der erfindungsgemäßen Partikel und ggf. Zusatzpartikel bezogen auf das Gesamtgewicht des Naturfaserverbundwerkstoffs kann je nach Anforderungen für das Endprodukt (Formteil) und je nach der gewünschten Herstellungsmethode erheblich variieren.

Ein vergleichsweise geringer Gehalt liegt bei ca. 30 Gew.-% und eignet sich beispielsweise für Spritzgussanwendungen.

Ein vergleichsweise hoher Gehalt liegt bei ca. 70 Gew.-% und eignet sich beispielweise für Extrusionsanwendungen.

Ein weiterer Aspekt der Erfindung betrifft ein Verfahren zur Herstellung des vorstehend beschriebenen erfindungsgemäßen Gebrauchsgegenstands umfassend die Herstellung eines Naturfaserverbundwerkstoffs umfassend aus Zuckerrüben gewonnene Partikel, welche bevorzugt in eine Polymermatrix eingebettet sind. In bevorzugten Ausführungsformen umfasst das erfindungsgemäße Herstellungsverfahren Spritzgießen und/oder Extrusion der Polymermatrix zusammen mit den darin eingebetteten aus Zuckerrüben gewonnenen Partikeln.

Ein weiterer Aspekt der Erfindung betrifft die Verwendung des vorstehend beschriebenen erfindungsgemäßen Gebrauchsgegenstands bei der Einnahme oder Aufbewahrung von Mahlzeiten oder Getränken.

Besonders bevorzugte Ausführungsformen der Erfindung 1 bis 15 sind nachfolgend als Sätze 1 bis 15 zusammengefasst:
Satz 1: Ein Gebrauchsgegenstand zur Verwendung bei der Einnahme oder Aufbewahrung von Mahlzeiten oder Getränken, wobei der Gebrauchsgegenstand aus Zuckerrüben gewonnene Partikel umfasst.
Satz 2: Der Gebrauchsgegenstand nach Satz 1, wobei der Gebrauchsgegenstand einen Natur-faserverbundwerkstoff umfasst, bei dem die aus Zuckerrüben gewonnenen Partikel in eine Polymermatrix eingebettet sind.
Satz 3: Der Gebrauchsgegenstand nach Satz 2, wobei (i) der Gehalt der Polymermatrix im Bereich von 0 bis 99,9 Gew.-% liegt, bezogen auf das Gesamtgewicht des Naturfaserverbundwerkstoffs; und/oder (ii) die Polymermatrix ein thermoplastisches Polymer umfasst, welches bevorzugt ausge-wählt ist aus der Gruppe umfassend Polyolefine, Polyethylen, Polypropylen, Polysty-rol, Polyvinylchlorid, Polyamide, Polyester, Polyethylenterephthalat, Polylactat, Polylactid, Polycarbonat, Polyacrylate, Polyacrylnitril, Polymethylmethacrylat, Polyvinylacetat, Acrylnitril-Butadien-Styrol, Polyetheretherketon und deren Mischungen oder Copolymerisaten; und/oder (iii) die Polymermatrix ein duroplastisches Polymer umfasst, welches bevorzugt ausgewählt ist aus der Gruppe umfassend Phenolharze, Aminoplaste, Epoxidharze, Polyesterharze, ABS-Harze, und deren Mischungen oder Copolymerisaten; und/oder (iv) die Polymermatrix ein Biopolymer umfasst, welches bevorzugt ausgewählt ist aus der Gruppe umfassend Stärke, Cellulose, Cellulosederivate, Lignin, Polymilchsäure, Po-lyhydroxyfettsäure, Chitin, Chitosan und Protein.
Satz 4: Der Gebrauchsgegenstand nach einem der vorstehenden Sätze, welcher ausgewählt ist aus der Gruppe bestehend aus Essgeschirr, Trinkgefäßen, Essbesteck, und Behältnissen zur Aufbewahrung von Lebensmitteln- oder Getränken.
Satz 5: Der Gebrauchsgegenstand nach einem der vorstehenden Sätze, (i) wobei die Partikel Saccharose enthalten und der Gehalt an Saccharose in den Partikeln höchstens 25 Gew.-% beträgt, bezogen auf das Trockengewicht der Partikel; und/oder (ii) wobei mindestens 30 Gew.-% der Partikel, bezogen auf das Gesamtgewicht der Partikel, eine Korngröße im Bereich von 30 bis 800 µm aufweisen; und/oder (iii) die Partikel Fasern enthalten.
Satz 6: Der Gebrauchsgegenstand nach Satz 5, wobei die mittlere Faserlänge der Fasern im Bereich von 30 bis 1000 µm liegt.
Satz 7: Der Gebrauchsgegenstand nach einem der vorstehenden Sätze, wobei die Partikel Pektin enthalten und der Gehalt an Pektin in den Partikeln (i) höchstens 14 Gew.-% beträgt, oder (ii) im Bereich von 14 bis 34 Gew.-% liegt, jeweils bezogen auf das Trockengewicht der Partikel.
Satz 8: Der Gebrauchsgegenstand nach einem der vorstehenden Sätze, welcher zusätzliche Partikel umfasst, welche aus Pflanzen oder Pflanzenteilen gewonnen wurden, welche sich von Zuckerrüben unterscheiden.
Satz 9: Der Gebrauchsgegenstand nach einem der vorstehenden Sätze, wobei die aus Zu-ckerrüben gewonnenen Partikel durch ein Verfahren umfassend folgende Schritte hergestellt wurden: a) Herstellen von Zuckerrübenschnitzeln durch Zerkleinern von Zuckerrüben; b) Extrahieren von Saccharose aus den Zuckerrübenschnitzeln; c) ggf. Verpressen der Zuckerrübenschnitzel; d) ggf. Trocknen der Zuckerrübenschnitzel; und e) Mahlen der Zuckerrübenschnitzel.
Satz 10: Der Gebrauchsgegenstand nach einem der vorstehenden Sätze, wobei der Ge-brauchsgegenstand zusätzlich ein funktionelles Additiv enthält, (i) welches ausgewählt ist aus der Gruppe bestehend aus Haftvermittlern, Pigmenten, Weichmachern, Antioxidantien, Füllstoffen oder Mischungen davon; bevorzugt einen Haftvermittler; und/oder (ii) wobei der Gewichtsanteil des funktionellen Additivs im Bereich von 0,1 bis 5,0 Gew.-% liegt, bezogen auf das Gesamtgewicht des Naturfaserverbundwerkstoffs.
Satz 11: Der Gebrauchsgegenstand nach einem der vorstehenden Sätze, (i) wobei der Gebrauchsgegenstand Essgeschirr ist, ausgewählt aus der Gruppe bestehend aus Teller, Tasse, Untertasse, Trinkbehältnis, Schüssel, Kanne, Messbecher, und Tablett; und/oder (ii) wobei der Gebrauchsgegenstand Essbesteck ist, ausgewählt aus der Gruppe bestehend aus Messer, Gabel, und Löffel; und/oder (iii) wobei der Gebrauchsgegenstand ein Behältnis zur Aufbewahrung von Lebensmitteln- oder Getränken ist, ausgewählt aus der Gruppe bestehend aus Dosen, Schüsseln und Flaschen; und/oder (iv) wobei der Gebrauchsgegenstand zusätzlich Trinkhalme und/oder Schneebesen umfasst.
Satz 12: Der Gebrauchsgegenstand nach einem der vorstehenden Sätze, welcher eine gegen Wasser und Feuchtigkeit beständige Beschichtung und/oder Antihaftbeschichtung umfasst. Satz
13: Der Gebrauchsgegenstand nach einem der vorstehenden Sätze, welcher spülmaschinenbeständig gemäß DIN EN 12875-1:2005-08 ist.
Satz 14: Der Gebrauchsgegenstand nach einem der vorstehenden Sätze, welcher mikrowellenbeständig gemäß DIN EN 15284:2007-07 und/oder temperaturwechselbeständig gemäß DIN EN 1183:1997-08 ist.
Satz 15: Verwendung des Gebrauchsgegenstands nach einem der vorstehenden Sätze bei der Einnahme oder Aufbewahrung von Mahlzeiten oder Getränken.

Die nachfolgenden Beispiele dienen zur Erläuterung der Erfindung, sind jedoch nicht einschränkend auszulegen:

Die Experimente umfassten folgende Teilschritte: 1. Auswahl von Rohstoffen, Rezepturerstellung und Herstellung von Mischungen auf Basis von Rübenpartikeln, Pektin, Stärke und Additiven in einem Labor-Messkneter; Ziel war ein möglichst hoher Anteil an Rübenpartikeln in den Mischungen; 2. Granulierung der Mischungen zur weiteren Verarbeitung; 3. Verpressen der Granulate zu Folien auf einer Rucks-Presse mit Möglichkeit der Rückkühlung; 4. Umformen der Folien zu Formteilen auf einer Vakuumpresse; 5. Qualitative, optische Bewertung der Formteile im Hinblick auf die geplante Zielanwendung als Einweggeschirr (Teller), z.B. im Hinblick auf Formstabilität beim Trocknen, Oberflächenstruktur, Realisierung möglicher Biegeradien beim Umformen; 6. Bewertung.

Es wurden folgende Materialien eingesetzt:
- Rübenpartikel aufgemahlen, mittlere Partikelgröße 200 µm;
- Pektin (BetaPec RU 301, Herbstreith & Fox);
- verschiedene Stärketypen (native Stärke, amylosereiche Stärke / Maisstärke; Cargill)
- Glyzerin (>98%, wasserfrei; Carl Roth)

Zu Vergleichszwecken wurde ein kommerziell verfügbares Compound auf Basis von Polyhydroxybutyrat (PHB, Linotech) eingesetzt. In diesem Fall wurde jedoch ohne Zugabe von Wasser und Glyzerin als Weichmacher gearbeitet.

Zur Compoundherstellung wurden die Mischungen aus Rübenpartikeln, PHB, Stärke bzw. Pektin für 10 min in einem Messkneter mit Banbury-Rotoren (ThermoFisher Scientific, Karlsruhe) verarbeitet. Im Falle von Stärke und Pektin wurden zusätzlich Wasser und Glycerin als Weichmacher eingesetzt.

Eine Übersicht über den Herstellungsprozess für das Einweggeschirr zeigt das folgende Schema:
a) Ausgangsmaterialien
b) Messkneter
c) Aufmahlen mit der Retsch-Mühle (4 mm Quadratlochsieb)
d) Streuung des Presskuchens mit einem Rakel (10 mm Streuhöhe)
e) Folienherstellung (Rucks-Presse 90 °C; 1,6 mm; 2 min)
f) Vorformatierung (Durchmesser 250 mm)
g) Umformung im Vakuumpresse (Hersteller: Global)
h) Trocknung in der Vakuumpresse (130 °C für 30 min)
i) Optionales Nachtrocknen im Trockenschrank
j) Zuschnitt des Tellers auf fertiges Maß

Für die Verarbeitung mussten zunächst geeignete Bedingungen erarbeitet werden. Als sehr vorteilhaft erwies sich, dass die Verarbeitungstemperaturen im Vergleich zu thermoplastischen Kunststoffen niedrig eingestellt werden konnten (kleiner als 100°C) und dass der Reinigungsaufwand nach der Verarbeitung gering war (kaum Anhaftungen).

### Beispiel 1:

Erste Rezepturliste mit den beiden jeweiligen Hauptkomponenten (Gew.-%):

| Bezeichnung | Rübe | Matrix | Verarbeitungstemperatur im Messkneter |
|---|---|---|---|
| Pec20 | 80 | 20 (Pektin) | 90°C |
| Pec40 | 60 | 40 (Pektin) | 90°C |
| Sta20 | 80 | 20 (native Stärke) | 90°C |
| Sta40 | 60 | 40 (native Stärke) | 90°C |
| PHB20* | 80 | 20 (PHB) | 180°C |
| PHB40 | 60 | 40 (PHB) | 180°C |

| | | | |
|---|---|---|---|
| *Nicht herstellbar; Menge an Matrix nicht ausreichend für Verbundherstellung. | | | |

Nach der Compoundherstellung wurden die Mischungen mit einer Schlagkreuzmühle aufgemahlen und bis zur weiteren Verarbeitung zu Folien in geschlossenen Beuteln im Kühlschrank aufbewahrt.

Bei den ersten Untersuchungen zur Folienherstellung zeigte sich, dass die stärkebasierten Varianten warm verpresst werden müssen, um eine Folie zu erzeugen. Bei pektinbasierten Folien konnte auch kalt verpresst werden, jedoch wiesen die Folien auch hier eine homogenere Struktur und bessere Oberfläche auf, wenn sie warm verpresst wurden. Grundsätzlich vorteilhaft bei der Verarbeitung der natürlichen Polymere als Matrix war, dass keine Rückkühlung in der Presse notwendig war im Vergleich zu Thermoplasten wie PHB.

Vor dem Umformen erfolgte eine Formatierung der Folien, z.B. durch Stanzen. Die Varianten Pec40 und Sta40 waren im ersten Versuch grundsätzlich optisch besser als die Varianten Pec20 und Sta20. Pec 40 ergab im ersten Versuch optisch die besten Ergebnisse nach dem Umformen. Die PHB40-Folien ließen sich nur unter Schwierigkeiten verarbeiten, da das Verarbeitungsfenster der Temperatur sehr klein war, jedoch machte die Stabilität der Teller einen guten Eindruck.

Es zeigte sich, dass die gefertigten Teller nach trocknen an der Luft trocknen etwas elastischer blieben als bei Trocknung im Trockenschrank (40°C, 2 Tage). Nach knapp 2 Wochen Lufttrocknung wiesen sie eine Restfeuchte von 4,7 % auf.

Grundsätzlich verzogen sich die Teller, bis auf die Varianten mit Pektin, beim Trocknen im Trockenschrank nicht, was den Vorgang der Trocknung deutlich beschleunigte.

### Beispiel 2:

Zweite Rezepturliste mit den beiden jeweiligen Hauptkomponenten (Gew.-%):

| Bezeichnung | Rübe | Matrix | Verarbeitungstemperatur im Messkneter |
|---|---|---|---|
| Pec20 | 80 | 20 (Pektin) | 90°C |
| Pec40 | 60 | 40 (Pektin) | 90°C |
| naSta20 | 80 | 20 (native Stärke) | 90°C |
| naSta40 | 60 | 40 (native Stärke) | 90°C |
| amSta20 | 80 | 20 (amylosereiche Stärke) | 90°C |
| amSta40 | 60 | 40 (amylosereiche Stärke) | 90°C |

In der zweiten Versuchsserie wurden die oben genannten Rezepturen bis auf die Varianten mit PHB wiederholt und zusätzlich eine weitere Stärketype (amylosereiche Stärke) untersucht, jeweils auch in Anteilen zu 20 Gew.-% und 40 Gew.-%.

Hierbei zeigte sich bei den Folien mit nativer Stärke wiederum, dass sich diese Folien sehr gut verarbeiten ließen. Die Dicke betrug etwa 1,2 - 1,3 mm. Der Rand der Folien wurde beim Umformen etwas dünner und lichtdurchlässiger. Insbesondere bei der Variante mit nur 20% nativer Stärke ergaben sich leichte Risse im Randbereich. Dies war bei der Variante mit 40% nativer Stärke weniger der Fall, insgesamt ergab sich ein homogeneres Erscheinungsbild. Exemplarisch wurde ein Teller gewogen, um zu ermitteln, ob eine Trocknung im Trockenschrank nach dem Umformen überhaupt erforderlich ist, oder ob das Material nach der Trocknung ohnehin wieder stark auffeuchtet.

Das Ergebnis für die ermittelten Gewichte war wie folgt:
nach der Trocknung in der Vakuumpresse: 71,7 g
nach dem Trockenschrank bei 50 °C für 18 h: 65,5 g
nach dem Zuschnitt: 55,5 g
nach einer Woche Lagerung im Technikum: 58,6 g

Dies zeigt, dass eine Trocknung im Trockenschrank nicht unbedingt erforderlich ist.

Die Varianten mit amylosereicher Stärke (20%; 40%), die mit den gleichen Bedingungen hergestellt wurden, waren vergleichsweise brüchig und nicht zur Weiterverarbeitung geeignet. Daraufhin wurden verschiedene Streudicken (7/10/12 mm) gewählt und unter ansonsten gleichen Bedingungen verpresst. Dies führte jedoch wiederum zu Brüchigkeit. Auch ein Verpressen bei höherer Temperatur von 120°C führte nicht zum Ziel. Diese Folien waren optisch etwas besser, aber immer noch zu brüchig für eine weitere Verarbeitung.

Daraufhin wurde geprüft, ob und bei welchen Bedingungen die Stärke verkleistert und somit filmbildende und plastische Eigenschaften im Verbundwerkstoff bewirkt. Native Stärke verkleisterte in Gegenwart von Wasser bei einer Temperatur von 70°C innerhalb von 15-20 min, bei 85°C bereits innerhalb von weniger als 10 min. Amylosereiche Stärke zeigte unter gleichen Bedingungen keine Verkleisterung.

Die Compounds mit 20% Pektin ließen sich gut zu Folien verarbeiten (Dicke 1,3 bis 1,4 mm), jedoch brach der Rand beim Umformen leicht. Bei den Folien mit 40% Pektin war der Rand deutlich besser umgeformt. Im Gegensatz zur ersten Versuchsserie trat an der Oberfläche eine leichte Blasenbildung auf, sobald die Folie die Presse verließ. Die Blasen blieben auch nach der Umformung in der Vakuumpresse erhalten.

Die umgeformten Teller auf Basis von nativer Stärke sowie mit Pektin wurden im Trockenschrank bei 50°C für 18 h nachgetrocknet. Hierbei verformten sich die Varianten mit Stärke nicht bzw. minimal. Die Varianten mit Pektin verformten sich dagegen stark, wobei mit 40% Pektin eine stärkere Verformung als mit 20% auftrat.

Zusammenfassend konnte nach der zweiten Versuchsserie (Beispiel 2) festgehalten werden, dass mit natürlicher Stärke (40 Gew.-%) die besten Ergebnisse erzielt wurden, da es weder zur Blasenbildung noch zur Verwerfung beim Trocknen kam.

### Beispiel 3:

Da die Variante mit 40% Pektin in der ersten Serie die besten Ergebnisse gezeigt hatte, wurde noch eine weitere Serie mit Pektin hergestellt (vom Messkneter bis zur Herstellung der Teller). In dieser abschließenden Serie 3 traten jedoch weiterhin Blasen auf.

Wie die vorstehenden experimentellen Ergebnisse belegen, können bei Verwendung hoher Anteile an Rübenpartikeln in einer Matrix aus natürlichen Polymeren wie Stärke Einwegartikel hergestellt werden, welche auf Kunststoffe verzichten. Die erfindungsgemäße ökonomische Lösung kommt insbesondere ohne die sonst verwendeten Kunstoffen wie PLA.

## Patentansprüche

1. Ein Gebrauchsgegenstand zur Verwendung bei der Einnahme oder Aufbewahrung von Mahlzeiten oder Getränken, wobei der Gebrauchsgegenstand einen Naturfaserverbundwerkstoff umfasst, bei dem aus Zuckerrüben gewonnene Partikel in eine Polymermatrix eingebettet sind, wobei die Polymermatrix ein Biopolymer umfasst oder daraus besteht.

2. Der Gebrauchsgegenstand nach Anspruch 1, wobei das Biopolymer ein natives Biopolymer ist; bevorzugt Stärke oder Pektin.

3. Der Gebrauchsgegenstand nach Anspruch 1 oder 2, wobei das Biopolymer ausgewählt ist aus der Gruppe bestehend aus Polysacchariden, Polyhydroxyalkanoaten, Lignin, Proteinen, Peptiden, sowie deren Mischungen.

4. Der Gebrauchsgegenstand nach einem der vorstehenden Ansprüche, wobei das Biopolymer ausgewählt ist aus der Gruppe bestehend aus
(a) Pektin; vorzugsweise ausgewählt aus der Gruppe bestehend aus
- hochverestertem Pektin (Veresterungsgrad > 50%), niederverestertem Pektin (Veresterungsgrad 5-50%), niederverestertem amidiertem Pektin (Veresterungsgrad 5-50%) oder Pektinsäure (Veresterungsgrad < 5%); und/oder
- Zuckerrübenpektin, Apfelpektin, Hagebuttenpektin, Quittenpektin, Orangenpektin, Zitronenpektin, Limettenpektin, Grapefruitpektin, Aprikosenpektin, Mirabellenpektin, Nektarinenpektin, Pfirsichpektin, Pflaumenpektin, Zwetschgenpektin, Brombeerpektin, Himbeerpektin, rotes Johannisbeerpektin, schwarzes Johannisbeerpektin, Stachelbeerpektin, Kirschpektin, Bananenpektin, Sonnenblumenpektin, Preiselbeerpektin und Möhrenpektin;
(b) Stärke (Amylose, Amylopektin), vorzugsweise ausgewählt aus der Gruppe bestehend aus
- Stärke mit einem Amylosegehalt von 10 bis 30%, Stärke mit einem Amylosegehalt von 30 bis 50% und Stärke mit einem Amylosegehalt von 50 bis 80%; und/oder
- Kartoffelstärke, Süßkartoffelstärke, Maniokstärke, Gerstenstärke, Maisstärke, Roggenstärke, Sorghumstärke, Reisstärke, Triticalestärke, Weizenstärke und Erbsenstärke;
(c) Glykogen;
(d) Cellulose, Cellulosederivate, Hemicellulose, Lignocellulose;
(e) Lignin;
(f) Polyhydroxyfettsäuren;
(g) Chitin;
(h) Chitosan;
(i) Peptiden und Proteinen;
(j) Nukleinsäuren;
(k) Lipiden;
(l) Cutin;
(m) Suberin;
sowie deren Mischungen.

5. Der Gebrauchsgegenstand nach einem der vorstehenden Ansprüche, wobei der Gehalt der Polymermatrix
- mindestens 5 Gew.-%, mindestens 10 Gew.-%, mindestens 15 Gew.-%, mindestens 20 Gew.-%, mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-%, mindestens 60 Gew.-%, mindestens 65 Gew.-%, mindestens 70 Gew.-%, mindestens 75 Gew.-%, mindestens 80 Gew.-%, mindestens 85 Gew.-%, mindestens 90 Gew.-%, oder mindestens 95 Gew.-% beträgt, jeweils bezogen auf das Gesamtgewicht des Naturfaserverbundwerkstoffs; bevorzugt mindestens 20 Gew.-%, bevorzugter mindestens 30 Gew.-%; und/oder
- höchstens 95 Gew.-%, höchstens 90 Gew.-%, höchstens 85 Gew.-%, höchstens 80 Gew.-%, höchstens 75 Gew.-%, höchstens 70 Gew.-%, höchstens 65 Gew.-%, höchstens 60 Gew.-%, höchstens 55 Gew.-%, höchstens 50 Gew.-%, höchstens 45 Gew.-%, höchstens 40 Gew.-%, höchstens 35 Gew.-%, höchstens 30 Gew.-%, höchstens 25 Gew.-%, höchstens 20 Gew.-%, höchstens 15 Gew.-%, höchstens 10 Gew.-%, oder höchstens 5 Gew.-% beträgt, jeweils bezogen auf das Gesamtgewicht des Naturfaserverbundwerkstoffs; bevorzugt höchstens 60 Gew.-%, bevorzugter höchstens 50 Gew.-%; und/oder
- im Bereich von 10±5 Gew.-%; 20±15 Gew.-%, 20±10 Gew.-%, 20±5 Gew.-%; 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, 70±5 Gew.-%; 80±15 Gew.-%, 80±10 Gew.-%, 80±5 Gew.-%; oder 90±5 Gew.-% liegt; jeweils bezogen auf das Gesamtgewicht des Naturfaserverbundwerkstoffs; bevorzugt im Bereich von 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, oder 50±5 Gew.-%.

6. Der Gebrauchsgegenstand nach einem der vorstehenden Ansprüche, wobei der Gehalt der Partikel, welche aus Zuckerrüben gewonnen wurden,
- mindestens 5 Gew.-%, mindestens 10 Gew.-%, mindestens 15 Gew.-%, mindestens 20 Gew.-%, mindestens 25 Gew.-%, mindestens 30 Gew.-%, mindestens 35 Gew.-%, mindestens 40 Gew.-%, mindestens 45 Gew.-%, mindestens 50 Gew.-%, mindestens 55 Gew.-%, mindestens 60 Gew.-%, mindestens 65 Gew.-%, mindestens 70 Gew.-%, mindestens 75 Gew.-%, mindestens 80 Gew.-%, mindestens 85 Gew.-%, mindestens 90 Gew.-%, oder mindestens 95 Gew.-% beträgt, jeweils bezogen auf das Gesamtgewicht des Gebrauchsgegenstands; bevorzugt mindestens 40 Gew.-%, bevorzugter mindestens 50 Gew.-%; und/oder
- höchstens 95 Gew.-%, höchstens 90 Gew.-%, höchstens 85 Gew.-%, höchstens 80 Gew.-%, höchstens 75 Gew.-%, höchstens 70 Gew.-%, höchstens 65 Gew.-%, höchstens 60 Gew.-%, höchstens 55 Gew.-%, höchstens 50 Gew.-%, höchstens 45 Gew.-%, höchstens 40 Gew.-%, höchstens 35 Gew.-%, höchstens 30 Gew.-%, höchstens 25 Gew.-%, höchstens 20 Gew.-%, höchstens 15 Gew.-%, höchstens 10 Gew.-%, oder höchstens 5 Gew.-% beträgt, jeweils bezogen auf das Gesamtgewicht des Gebrauchsgegenstands; bevorzugt höchstens 80 Gew.-%, bevorzugter höchstens 70 Gew.-%; und/oder
- im Bereich von 10±5 Gew.-%; 20±15 Gew.-%, 20±10 Gew.-%, 20±5 Gew.-%; 30±25 Gew.-%, 30±20 Gew.-%, 30±15 Gew.-%, 30±10 Gew.-%, 30±5 Gew.-%; 40±35 Gew.-%, 40±30 Gew.-%, 40±25 Gew.-%, 40±20 Gew.-%, 40±15 Gew.-%, 40±10 Gew.-%, 40±5 Gew.-%; 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, 70±5 Gew.-%; 80±15 Gew.-%, 80±10 Gew.-%, 80±5 Gew.-%; oder 90±5 Gew.-% liegt; jeweils bezogen auf das Gesamtgewicht des Gebrauchsgegenstands; bevorzugt im Bereich von 50±45 Gew.-%, 50±40 Gew.-%, 50±35 Gew.-%, 50±30 Gew.-%, 50±25 Gew.-%, 50±20 Gew.-%, 50±15 Gew.-%, 50±10 Gew.-%, 50±5 Gew.-%; 60±35 Gew.-%, 60±30 Gew.-%, 60±25 Gew.-%, 60±20 Gew.-%, 60±15 Gew.-%, 60±10 Gew.-%, 60±5 Gew.-%; 70±25 Gew.-%, 70±20 Gew.-%, 70±15 Gew.-%, 70±10 Gew.-%, oder 70±5 Gew.-%.

7. Der Gebrauchsgegenstand nach einem der vorstehenden Ansprüche, wobei der Gesamtgehalt der Partikel, welche aus Zuckerrüben gewonnen wurden, und des Biopolymers
- mindestens 70 Gew.-%, mindestens 75 Gew.-%, mindestens 80 Gew.-%, mindestens 85 Gew.-%, mindestens 90 Gew.-%, oder mindestens 95 Gew.-% beträgt, jeweils bezogen auf das Gesamtgewicht des Gebrauchsgegenstands; bevorzugt mindestens 50 Gew.-%, bevorzugter mindestens 60 Gew.-% beträgt, jeweils bezogen auf das Gesamtgewicht des Gebrauchsgegenstands; und/oder
- höchstens 95 Gew.-%, höchstens 90 Gew.-%, höchstens 85 Gew.-%, höchstens 80 Gew.-%, höchstens 75 Gew.-%, höchstens 70 Gew.-% beträgt, jeweils bezogen auf das Gesamtgewicht des Gebrauchsgegenstands; und/oder
- im Bereich von 70±30 Gew.-%, 70±25 Gew.-%, 70±20 Gew.-%, 70±15 Gew.-%, 70±10 Gew.-%, 70±5 Gew.-%; 80±20 Gew.-%, 80±15 Gew.-%, 80±10 Gew.-%, 80±5 Gew.-%; 90±10 Gew.-% oder 90±5 Gew.-% liegt; jeweils bezogen auf das Gesamtgewicht des Gebrauchsgegenstands.

8. Der Gebrauchsgegenstand nach einem der vorstehenden Ansprüche, wobei die Partikel Saccharose enthalten und der Gehalt an Saccharose in den Partikeln höchstens 25 Gew.-% beträgt, bezogen auf das Trockengewicht der Partikel.

9. Der Gebrauchsgegenstand nach einem der vorstehenden Ansprüche, wobei mindestens 30 Gew.-% der Partikel, bezogen auf das Gesamtgewicht der Partikel, eine Korngröße im Bereich von 30 bis 800 µm aufweisen.

10. Der Gebrauchsgegenstand nach einem der vorstehenden Ansprüche, wobei die Partikel Fasern enthalten.

11. Der Gebrauchsgegenstand nach einem der vorstehenden Ansprüche, wobei die Partikel Pektin enthalten und der Gehalt an Pektin in den Partikeln
- höchstens 14 Gew.-% beträgt, oder
- im Bereich von 14 bis 34 Gew.-% liegt,
jeweils bezogen auf das Trockengewicht der Partikel.

12. Der Gebrauchsgegenstand nach einem der vorstehenden Ansprüche, welcher zusätzliche Partikel umfasst, welche aus Pflanzen oder Pflanzenteilen gewonnen wurden, welche sich von Zuckerrüben unterscheiden.

13. Der Gebrauchsgegenstand nach einem der vorstehenden Ansprüche, wobei der Gebrauchsgegenstand zusätzlich ein funktionelles Additiv enthält,
- welches ausgewählt ist aus der Gruppe bestehend aus Haftvermittlern, Pigmenten, Weichmachern, Antioxidantien, Füllstoffen oder Mischungen davon; bevorzugt einen Haftvermittler; und/oder
- wobei der Gewichtsanteil des funktionellen Additivs im Bereich von 0,1 bis 5,0 Gew.-% liegt, bezogen auf das Gesamtgewicht des Naturfaserverbundwerkstoffs.

14. Der Gebrauchsgegenstand nach einem der vorstehenden Ansprüche, welcher ausgewählt ist aus der Gruppe bestehend aus Essgeschirr, Trinkgefäßen, Essbesteck, und Behältnissen zur Aufbewahrung von Lebensmitteln- oder Getränken; bevorzugt ausgewählt aus der Gruppe bestehend aus Lebensmittelverpackungen, Trinkbechern, Besteck, Tellern und Getränkebehältern.

15. Verwendung des Gebrauchsgegenstands nach einem der vorstehenden Ansprüche bei der Einnahme oder Aufbewahrung von Mahlzeiten oder Getränken.
